# EUROPEAN PATENT APPLICATION

(11) **EP 4 319 168 A1**
(43) Date of publication of application: **07.02.2024**
(21) Application number: 21937755.3
(22) Date of filing: 27.12.2021
(51) Int. Cl.: H04N 21/239

(54) **VIDEO PLAYING METHOD, APPARATUS AND SYSTEM, AND COMPUTER-READABLE STORAGE MEDIUM**

(30) Priority: 22.04.2021 CN 202110435658
(71) Applicant: Huawei Technologies Co., Ltd., Longgang Shenzhen, Guangdong 518129 (CN)
(72) Inventor: HOU, Chengbao, Shenzhen, Guangdong 518129 (CN); QU, Xiaogang, Shenzhen, Guangdong 518129 (CN); LI, Hongbo, Shenzhen, Guangdong 518129 (CN); CAO, Yang, Shenzhen, Guangdong 518129 (CN)
(74) Representative: Huawei European IPR
(86) International application number: PCT/CN2021/141641
(87) International publication number: WO 2022/222533

(57) **Abstract**

A video playback method, apparatus, and system, and a computer-readable storage medium are disclosed, and belong to the field of video processing technologies. After receiving a playback request sent by a terminal, an upper-layer device sends a video segment corresponding to a target viewpoint for which playing is requested by the terminal and rotation video data corresponding to the target viewpoint to the terminal. When receiving a rotation instruction, the terminal may implement surround playback of a video image based on the pre-obtained rotation video data, and therefore a surround playback delay is low. In addition, resolution of the video image played by the terminal may be the same as resolution of a video picture in the video segment or a video picture in the rotation video data. Therefore, the video playback method is not limited to a quantity of cameras used for front-end shooting, and has a wide application range.

## Description

This application claims priority to Chinese Patent Application No. 202110435658.5, filed on April 22, 2021 and entitled "VIDEO PLAYBACK METHOD, APPARATUS, AND SYSTEM, AND COMPUTER-READABLE STORAGE MEDIUM", which is incorporated herein by reference in its entirety.

### TECHNICAL FIELD

This application relates to the field of video processing technologies, and in particular, to a video playback method, apparatus, and system, and a computer-readable storage medium.

### BACKGROUND

With rapid development of internet technologies, users begin to pursue better video viewing experience. This derives requirements for surround viewing around a target object. Especially in sports games, concerts, or other scenarios having a specific focus, the requirements for surround viewing are even stronger. To meet the requirements of the users for surround viewing, surround playback needs to be implemented on a terminal.

In surround playback, a plurality of cameras distributed in specific positions need to be used to capture video images at different angles in a same focus area during front-end shooting. In addition, based on a camera synchronization technology, the plurality of cameras need to capture pictures at a same moment and at a same frequency. Then, the plurality of cameras separately send captured video streams to a video processing platform, and the video processing platform processes the plurality of channels of video streams, to further implement surround playback of the focus area on the terminal.

In a related technology, a server usually splices video frames having a same capture moment in a plurality of channels of video streams into one video frame. For example, during front-end shooting, 16 cameras are used to capture video images at different angles in a same focus area. The server adjusts resolution of a video frame in each of received 16 channels of video streams to 960×540. Then, 16 video frames having a same capture moment in the 16 channels of video streams are combined in an equal ratio of 4×4 to form one video frame having resolution of 3840×2160 (namely, 4K), to obtain one channel of video stream. The server sends the channel of video stream to a terminal. After decoding the channel of video stream, the terminal selects, based on a specified viewing viewpoint, 1/16 of the video images (which is a video image captured by one camera) for playing.

However, according to a video playback method in the related technology, because resolution of an image played by the terminal is inversely proportional to a quantity of cameras used for front-end shooting, the quantity of cameras used for front-end shooting is limited. Consequently, the method has a limited application range.

### SUMMARY

This application provides a video playback method, apparatus, and system, and a computer-readable storage medium, to resolve a problem in a related technology that video playback is highly limited.

According to a first aspect, a video playback method is provided. The method includes: An upper-layer device receives a playback request sent by a terminal. The playback request includes playback viewpoint information, and the playback viewpoint information indicates a target viewpoint for which playing is requested. The upper-layer device sends a video segment corresponding to the target viewpoint and rotation video data corresponding to the target viewpoint to the terminal. The rotation video data includes video data corresponding to a forward viewpoint and/or video data corresponding to a reverse viewpoint. The forward viewpoint includes one or more first viewpoints located in a clockwise direction of the target viewpoint, and the reverse viewpoint includes one or more second viewpoints located in a counterclockwise direction of the target viewpoint.

In this application, the upper-layer device sends the video segment corresponding to the target viewpoint for which playing is requested by the terminal and the rotation video data corresponding to the target viewpoint to the terminal. After receiving the video segment corresponding to the target viewpoint, the terminal decodes the video segment to implement playback of a video image captured by the target viewpoint. When receiving a rotation instruction, the terminal may implement surround playback of the video image based on pre-obtained rotation video data and therefore a surround playback delay is low. In addition, resolution of a played video image may be the same as resolution of a video picture in the video segment or a video picture in the rotation video data. Therefore, the video playback method provided in this application is not limited to a quantity of cameras used for front-end shooting, and has a wide application range. In addition, compared with a related technology, the upper-layer device does not need to always send, to the terminal, video images captured by all cameras, so that a data transmission volume can be reduced, and transmission resources can be saved.

Optionally, an implementation process of the upper-layer device sending the rotation video data corresponding to the target viewpoint to the terminal includes: The upper-layer device sends the rotation video data to the terminal in response to receiving, by the upper-layer device, a rotation preparation request sent by the terminal. The rotation preparation request is for requesting to obtain the rotation video data corresponding to the target viewpoint. Alternatively, in response to the playback request, the upper-layer device sends the rotation video data to the terminal.

In this application, after receiving the playback request sent by the terminal, the upper-layer device may actively send, to the terminal, the rotation video data corresponding to a viewpoint for which playing is requested. Alternatively after receiving the rotation preparation request sent by the terminal, the upper-layer device may send, in a passive response, the rotation video data to the terminal, where the rotation video data corresponds to the viewpoint for which playing is requested.

Optionally, the video data corresponding to the forward viewpoint includes a video segment corresponding to each first viewpoint. Alternatively, the forward viewpoint includes a plurality of first viewpoints located in the clockwise direction of the target viewpoint. The video data corresponding to the forward viewpoint is a forward rotation segment, and the forward rotation segment includes a forward dynamic rotation fragment and/or a forward static rotation fragment. The forward dynamic rotation fragment includes a plurality of picture frame groups are obtained based on video pictures in video segments corresponding to the plurality of first viewpoints, and each picture frame group in the forward dynamic rotation fragment is obtained based on a video picture in a video segment corresponding to one first viewpoint. The plurality of picture frame groups in the forward dynamic rotation fragment are arranged in a chronological order, and are arranged in ascending order of distances from the plurality of first viewpoints to the target viewpoint in a clockwise direction. The forward static rotation fragment includes a plurality of picture frame groups obtained based on video pictures in video segments corresponding to the plurality of first viewpoints, and each picture frame group in the forward static rotation fragment is obtained based on a video picture in a video segment corresponding to one first viewpoint. The plurality of picture frame groups in the forward static rotation fragment correspond to a same playback time period, and are arranged in ascending order of distances from the plurality of first viewpoints to the target viewpoint in the clockwise direction.

Optionally, the video data corresponding to the reverse viewpoint includes a video segment corresponding to each second viewpoint. Alternatively, the reverse viewpoint includes a plurality of second viewpoints located in the counterclockwise direction of the target viewpoint, the video data corresponding to the reverse viewpoint is a reverse rotation segment, and the reverse rotation segment includes a reverse dynamic rotation fragment and/or a reverse static rotation fragment. The reverse dynamic rotation fragment includes a plurality of picture frame groups obtained based on video pictures in video segments corresponding to the plurality of second viewpoints, and each picture frame group in the reverse dynamic rotation fragment is obtained based on a video picture in a video segment corresponding to one second viewpoint. The plurality of picture frame groups in the reverse dynamic rotation fragment are arranged in a chronological order, and are arranged in ascending order of distances from the plurality of second viewpoints to the target viewpoint in a counterclockwise direction. The reverse static rotation fragment includes a plurality of picture frame groups obtained based on video pictures in video segments corresponding to the plurality of first viewpoints, and each picture frame group in the reverse static rotation fragment is obtained based on a video picture in a video segment corresponding to one first viewpoint. The plurality of picture frame groups in the reverse static rotation fragment correspond to a same playback time period, and are arranged in ascending order of distances from the plurality of first viewpoints to the target viewpoint in the clockwise direction.

The picture frame group in this application includes one or more frames of video pictures, and each picture frame group can be independently decoded.

Optionally, the upper-layer device may further receive a surround playback request sent by the terminal. The surround playback request includes rotation viewpoint information, and the rotation viewpoint information indicates a rotation range. The upper-layer device determines playback time information based on the surround playback request. The upper-layer device generates a rotation segment based on the rotation viewpoint information and the playback time information. The rotation segment includes picture frame groups corresponding to a plurality of viewpoints in the rotation range, the picture frame groups each include one or more frames of video pictures, and each picture frame group can be independently decoded. The upper-layer device sends the rotation segment to the terminal.

In this application, the upper-layer device determines the playback time information based on the surround playback request sent by the terminal, and then generates the rotation segment based on the playback time information and the rotation viewpoint information in the surround playback request. Because the rotation segment includes the picture frame groups corresponding to the plurality of viewpoints in the rotation range indicated by the rotation viewpoint information, after receiving the rotation segment, the terminal decodes the rotation segment to implement surround playback of a video image. In addition, resolution of played video image may be the same as resolution of a video picture in the rotation segment. Therefore, the video playback method provided in this application is not limited to a quantity of cameras used for front-end shooting, and has a wide application range.

Optionally, the picture frame group is a GOP. Alternatively, the picture frame group includes an inserted frame. Alternatively, the picture frame group includes a combination of an inserted frames and a P frame. Alternatively, the picture frame group includes a combination of an inserted frames, a P frame, and a B frame.

In this application, the picture frame group includes the inserted frames. In other words, the rotation segment may be generated based on the inserted frame. In this case, a full I frame or a mini GOP does not need to be used in the video segment sent by the upper-layer device to the terminal, and a normal GOP may be used. This may reduce a data volume of the video segment sent by the upper-layer device to the terminal. In addition, a data volume of the inserted frame is usually less than a data volume of the I frame. This may reduce a data volume of the rotation segment sent by the upper-layer device to the terminal. Therefore, that the rotation segment is generated by using an inserted frame technology can effectively reduce consumption of network transmission resources.

Optionally, the rotation preparation request includes one or more of a preparation rotation direction, a quantity of preparation rotation viewpoints, an identifier of a preparation rotation viewpoint, or a preparation rotation state, where the preparation rotation state includes a dynamic rotation state and/or a static rotation state, and content in the rotation preparation request is pre-configured in the terminal.

According to a second aspect, a video playback method is provided. The method includes: When a terminal receives a playback instruction, the terminal sends, to an upper-layer device, a playback request generated based on the playback instruction. The playback request includes playback viewpoint information, and the playback viewpoint information indicates a target viewpoint for which playing is requested. The terminal receives a video segment corresponding to the target viewpoint and rotation video data corresponding to the target viewpoint that are sent by the upper-layer device. The rotation video data includes video data corresponding to a forward viewpoint and/or video data corresponding to a reverse viewpoint. The forward viewpoint includes one or more first viewpoints located in a clockwise direction of the target viewpoint, and the reverse viewpoint includes one or more second viewpoints located in a counterclockwise direction of the target viewpoint. When the terminal receives a rotation instruction in a process of playing a video image based on the video segment corresponding to the target viewpoint, the terminal determines a rotation direction based on the rotation instruction. The rotation direction is a clockwise direction or a counterclockwise direction. In response to the rotation video data including target video data corresponding to a viewpoint located in the rotation direction of the target viewpoint, the terminal plays the video image based on the target video data.

In this application, the upper-layer device sends a video segment corresponding to the target viewpoint for which playing is requested by the terminal and the rotation video data corresponding to the target viewpoint to the terminal. After receiving the video segment corresponding to the target viewpoint, the terminal decodes the video segment to implement playback of a video image captured by the target viewpoint. When receiving a rotation instruction, the terminal may implement surround playback of the video image based on the rotation video data, and therefore a surround playback delay is low. In addition, resolution of a played video image may be the same as resolution of a video picture in the video segment or a video picture in the rotation video data. Therefore, the video playback method provided in this application is not limited to a quantity of cameras used for front-end shooting, and has a wide application range. In addition, compared with a related technology, the upper-layer device does not need to always send, to the terminal, video images captured by all cameras, so that a data transmission volume can be reduced, and transmission resources can be saved.

Optionally, before the terminal receives the rotation instruction, the terminal may further generate a rotation preparation request. The rotation preparation request is for requesting to obtain the rotation video data corresponding to the target viewpoint. The terminal sends the rotation preparation request to the upper-layer device, and the rotation video data corresponding to the target viewpoint is sent by the upper-layer device in response to the rotation preparation request.

Optionally, the rotation preparation request includes one or more of a preparation rotation direction, a quantity of preparation rotation viewpoints, an identifier of a preparation rotation viewpoint, or a preparation rotation state, where the preparation rotation state includes a dynamic rotation state and/or a static rotation state, and content in the rotation preparation request is pre-configured in the terminal.

In an implementation, the target video data is a target rotation segment. The target rotation segment includes a plurality of picture frame groups obtained based on video pictures in video segments corresponding to a plurality of viewpoints in the rotation direction of the target viewpoint. Each picture frame group in the target rotation segment is obtained based on a video picture in a video segment corresponding to one viewpoint in the rotation direction of the target viewpoint. The picture frame groups each include one or more frames of video pictures, and each picture frame group can be independently decoded.

The target rotation segment includes a dynamic rotation fragment in response to receiving, by the terminal, the rotation instruction in a video playback state. A plurality of picture frame groups in the dynamic rotation fragment are arranged in a chronological order, and are arranged in ascending order of distances from the plurality of viewpoints to the target viewpoint in the rotation direction. Alternatively, the target rotation segment includes a static rotation fragment in response to receiving, by the terminal, the rotation instruction in a video pause state. A plurality of picture frame groups in the static rotation fragment correspond to a same playback time period, and are arranged in ascending order of distances from the plurality of viewpoints to the target viewpoint in the rotation direction.

Correspondingly, an implementation process of the terminal playing a video image based on the target video data includes: The terminal decodes and plays the target rotation segment.

In this implementation, when receiving the rotation instruction, the terminal decodes the pre-obtained rotation segment to implement the surround playback of the video image, and therefore a surround playback delay is low.

In another implementation, the target video data includes the video segments that separately correspond to the plurality of viewpoints located in the rotation direction of the target viewpoint. An implementation process of the terminal playing a video image based on the target video data includes: The terminal separately generates the picture frame groups based on the video pictures in the video segments corresponding to the plurality of viewpoints. The picture frame groups each include one or more frames of video pictures, and each picture frame group can be independently decoded. The terminal sequentially plays the video pictures in the generated picture frame groups in ascending order of distances from the plurality of viewpoints to the target viewpoint in the rotation direction.

In this implementation, when the terminal receives the rotation instruction, the terminal may decode and play a pre-obtained video picture in a video segment corresponding to a viewpoint in the rotation direction, to implement surround playback of the video image, and therefore a surround playback delay is low.

Optionally, when the terminal receives the rotation instruction, the terminal sends, to the upper-layer device, a surround playback request generated based on the rotation instruction. The surround playback request includes rotation viewpoint information, and the rotation viewpoint information indicates a rotation range. The terminal receives a rotation segment sent by the upper-layer device. The rotation segment includes the picture frame groups corresponding to the plurality of viewpoints in the rotation range, the picture frame group each include one or more frames of video pictures, and each picture frame group can be independently decoded. The terminal decodes and plays the rotation segment.

Optionally, the picture frame group is a GOP; the picture frame group includes an inserted frame; the picture frame group includes a combination of an inserted frame and a P frame; or the picture frame group includes a combination of an inserted frame, a P frame, and a B frame.

According to a third aspect, a video playback apparatus is provided. The video playback apparatus is an upper-layer device. The apparatus includes a plurality of function modules, and the plurality of function modules interact with each other to implement the method in the first aspect and the implementation of the first aspect. The plurality of function modules may be implemented based on software, hardware, or a combination of software and hardware, and the plurality of function modules may be randomly combined or divided based on a specific implementation.

According to a fourth aspect, a video playback apparatus is provided. The video playback apparatus is a terminal. The apparatus includes a plurality of function modules, and the plurality of function modules interact with each other to implement the method in the second aspect and the implementation of the second aspect. The plurality of function modules may be implemented based on software, hardware, or a combination of software and hardware, and the plurality of function modules may be randomly combined or divided based on a specific implementation.

According to a fifth aspect, a video playback system is provided. The system includes an upper-layer device and a terminal. The upper-layer device includes the video playback apparatus according to the third aspect, and the terminal includes the video playback apparatus according to the fourth aspect.

According to a sixth aspect, a video playback apparatus is provided, including a processor and a memory.

The memory is configured to store a computer program. The computer program includes program instructions.

The processor is configured to invoke the computer program to implement the video playback method according to the first aspect; or implement the video playback method according to the second aspect.

According to a seventh aspect, a computer storage medium is provided. The computer storage medium stores instructions. When the instructions are executed by a processor of a computer device, the video playback method according to the first aspect or the second aspect is implemented

According to an eighth aspect, a chip is provided. The chip includes a programmable logic circuit and/or program instructions. When the chip runs, the method in the first aspect and the implementations of the first aspect or the method in the second aspect and the implementations of the second aspect are implemented.

According to a ninth aspect, a computer program product is provided, including a computer program. When the computer program is executed by a processor, the video playback method according to the first aspect or the second aspect is implemented.

Beneficial effects brought by the technical solutions provided in this application include at least the following:

The upper-layer device sends the video segment corresponding to the target viewpoint for which playing is requested by the terminal and the rotation video data corresponding to the target viewpoint to the terminal. After receiving the video segment corresponding to the target viewpoint, the terminal decodes the video segment to implement playback of a video image captured by the target viewpoint. When receiving the rotation instruction, the terminal may implement surround playback of the video image based on pre-obtained rotation video data, and therefore a surround playback delay is low. In addition, resolution of a played video image may be the same as resolution of the video picture in the video segment or the video picture in the rotation video data. Therefore, the video playback method provided in embodiments of this application is not limited to a quantity of cameras used for front-end shooting, and has a wide application range. In addition, compared with a related technology, the upper-layer device does not need to always send, to the terminal, video images captured by all cameras, so that a data transmission volume can be reduced, and transmission resources can be saved. In addition, the rotation segment may be generated based on the inserted frames. In this case, a full I frame or a mini GOP does not need to be used in the video segment sent by the upper-layer device to the terminal, and a normal GOP may be used. This may reduce a data volume of the video segment sent by the upper-layer device to the terminal. In addition, a data volume of the inserted frame is usually less than a data volume of the I frame. This may reduce a data volume of the rotation segment sent by the upper-layer device to the terminal. Therefore, that the rotation segment is generated by using an inserted frame technology can effectively reduce consumption of network transmission resources.

### BRIEF DESCRIPTION OF DRAWINGS

FIG. 1 is a schematic structural diagram of a video playback system according to an embodiment of this application;
FIG. 2 is a schematic structural diagram of a video segment according to an embodiment of this application;
FIG. 3 is a schematic structural diagram of comparison between one GOP obtained through encoding and an inserted frame stream according to an embodiment of this application;
FIG. 4 is a schematic diagram of a camera distribution scenario on a media source side according to an embodiment of this application;
FIG. 5 is a schematic flowchart of a video playback method according to an embodiment of this application;
FIG. 6 is another a schematic diagram of a camera distribution scenario on a media source side according to an embodiment of this application;
FIG. 7 is a schematic structural diagram of video segments that separately correspond to a plurality of viewpoints according to an embodiment of this application;
FIG. 8 is a schematic diagram of media content sent by an upper-layer device to a terminal according to an embodiment of this application;
FIG. 9 is a schematic structural diagram of forward static rotation segments according to an embodiment of this application;
FIG. 10 is a schematic structural diagram of video streams and inserted frame streams that separately correspond to a plurality of viewpoints according to an embodiment of this application;
FIG. 11 is another schematic diagram of media content sent by an upper-layer device to a terminal according to an embodiment of this application;
FIG. 12 is another schematic structural diagram of forward static rotation segments according to an embodiment of this application;
FIG. 13 is a schematic diagram of a dynamic rotation segment generation process according to an embodiment of this application;
FIG. 14 is another schematic diagram of a dynamic rotation segment generation process according to an embodiment of this application;
FIG. 15 is a schematic diagram of a static rotation segment generation process according to an embodiment of this application;
FIG. 16 is another schematic diagram of a static rotation segment generation process according to an embodiment of this application;
FIG. 17 is a schematic structural diagram of a video playback apparatus according to an embodiment of this application;
FIG. 18 is a schematic structural diagram of another video playback apparatus according to an embodiment of this application; and
FIG. 19 is a block diagram of a video playback apparatus according to an embodiment of this application.

### DESCRIPTION OF EMBODIMENTS

To make objectives, technical solutions, and advantages of this application clearer, the following further describes implementations of this application in detail with reference to the accompanying drawings.

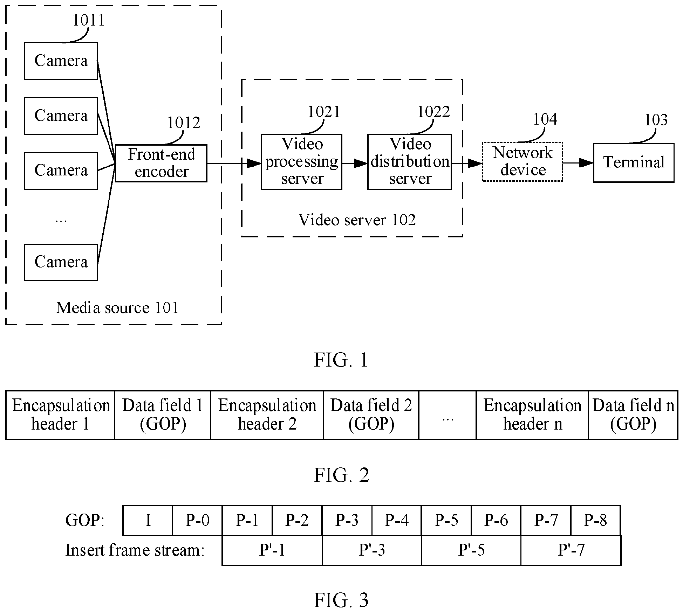

FIG. 1 is a schematic structural diagram of a video playback system according to an embodiment of this application. As shown in FIG. 1, the system includes a media source 101, a video server 102, and a terminal 103.

The media source 101 is configured to provide a plurality of channels of video streams. Refer to FIG. 1. The media source 101 includes a plurality of cameras 1011 and a front-end encoder 1012. The cameras 1011 are connected to the front-end encoder 1012. Each camera 1011 is configured to capture one channel of video stream, and transmits the captured video stream to the front-end encoder 1012. The front-end encoder 1012 is configured to perform encoding on video streams captured by the plurality of cameras 1011, and sends encoded video streams to the video server 102. In embodiments of this application, the plurality of cameras 1011 are configured to capture video pictures at different angles in a same focus area, and the plurality of cameras 1011 capture the pictures at a same moment and at a same frequency. Optionally, a camera synchronization technology may be used to implement synchronous shooting of the plurality of cameras 1011. A quantity of cameras in the figure is merely used as an example for description, and is not intended to limit the video playback system provided in embodiments of this application. The plurality of cameras may be arranged in a circular manner, a sector manner, or the like. An arrangement manner of the cameras is not limited in embodiments of this application.

The video server 102 is configured to process, by using an OTT (over the top) technology, a video stream sent by the media source 101, and delivers a processed video stream to a terminal via a content delivery network (content delivery network, CDN). The CDN is an intelligent virtual network built based on an existing network. The CDN may include edge servers deployed in different places, and may further include a central server. Optionally, refer to FIG. 1. The video server 102 includes a video processing server 1021 and a video distribution server 1022. The video processing server 1021 is configured to process a video stream by using the OTT technology, and sends a processed video stream to the video distribution server 1022. The video distribution server 1022 is configured to distribute the video stream to the terminal. The video processing server 1021 may also be referred to as a video processing platform. The video processing server 1021 may be one server, a server cluster including several servers, or a cloud computing service center. The video distribution server 1022 may be the central server or the edge server of the CDN. Certainly, the video processing server 1021 and the video distribution server 1022 may alternatively be integrated together. This is not limited in embodiments of this application.

The terminal 103 is a video playback end, and is configured to decode and play the video streams sent by the video server 102. Optionally, the terminal 103 can change a playback angle in one or more of control manners such as touch control, voice control, gesture control, remote control, or the like. A control manner of triggering the terminal to change the playback angle is not limited in embodiments of this application. For example, the terminal 103 may be a device, such as a mobile phone, a tablet computer, an intelligent wearable device, or the like that can change a playback angle in a touch control manner or a voice control manner. Alternatively, the terminal 103 may be a device, such as a set top box (set top box, STB) or the like that can change a playback angle through control of a remote control.

In embodiments of this application, after obtaining the plurality of channels of video streams, the front-end encoder 1012 on the media source 101 side or the video processing server 1021 on the video server 102 side re-encodes (which may also be referred to as transcoding) each channel of video stream to obtain a group of pictures (Group of Pictures, GOP), and generates, based on the GOP, a video segment for transmission, and each GOP can be decoded independently. One video segment is usually encapsulated with a plurality of GOPs, and each GOP includes one or more frames of video pictures. For example, one GOP may include one intra-coded picture (intra-coded picture, I) frame. Alternatively, one GOP may include one I frame and one or more predictive coded picture (predictive coded picture, P) frames located after the I frame. Alternatively, one GOP may include one I frame, one or more P frames located after the I frame, and one or more bidirectionally predicted coded picture (bidirectionally predicted picture, B) frames located between the I frame and the P frame. The GOP is usually a set of continuous video pictures in time. A timestamp of the GOP obtained by re-encoding a video stream corresponds to a moment at which a camera captures a video picture in the GOP. For example, the timestamp of the GOP may be set to a capture moment of a last frame of video picture in the GOP. For another example, when the GOP includes a plurality of frames of video pictures, the GOP correspondingly has a start timestamp and an end timestamp. The start timestamp is a capture moment of a first frame of video picture in the GOP, and the end timestamp is a capture moment of a last frame of video picture in the GOP.

Optionally, a GOP whose time length is less than one second is usually referred to as a mini GOP (mini GOP). A time parameter of the GOP may be set by a management personnel. In a fixed time length, a quantity of video picture frames included in each GOP is positively correlated with a shooting frame rate of the camera. In other words, a higher shooting frame rate of the camera indicates a larger quantity of video picture frames included in each GOP. For example, the GOP may include two frames of video pictures (which may correspond to a case in which a quantity of transmitted frames per second (frame per second, FPS) is 25 (25 FPS for short)), three frames of video pictures (which may correspond to 30 FPS), five frames of video pictures (which may correspond to 50 FPS), or six frames of video pictures (which may correspond to 60 FPS). Certainly, the GOP may alternatively include only one frame of a video picture (in other words, include only the I frame) or include more frames of video pictures. This is not limited in embodiments of this application.

In embodiments of this application, the GOP in the video segment is encoded in an independent transmission encapsulation manner, so that each GOP may be used as an independent fragment (which may also be referred to as a fragment) for independent use. For example, the video segment may be encapsulated in a fragmented mp4 (fragmented mp4, fmp4) format. The fmp4 format is a streaming media format defined in an MPEG-4 standard proposed by a moving picture expert group (moving picture expert group, MPEG). FIG. 2 is a schematic structural diagram of a video segment according to an embodiment of this application. As shown in FIG. 2, the video fragment includes n encapsulation headers and n data fields (mdat), and each mdat is for carrying data of one GOP. In other words, the video segment is encapsulated with n GOPs, and n is an integer greater than 1. Each encapsulation header includes a moof field. An encapsulation manner of the video segment may also be referred to as a multi-moof header encapsulation manner. Optionally, the encapsulation header may further include a styp field and a sidx field.

It should be noted that a segment (segment) in embodiments of this application is video data that can be independently requested to be obtained, and a fragment (fragment) is video data that can be independently decoded and played. One segment usually includes one or more fragments.

Optionally, after obtaining a plurality of channels of video streams, a front-end encoder 1012 on a media source 101 side or a video processing server 1021 on a video server 102 side may further re-encode each channel of video stream to obtain an inserted frame stream. The inserted frame stream includes a plurality of inserted frames, the inserted frame is a P frame obtained through encoding without reference to a time-domain motion vector, and the inserted frame may be considered as a continuation of an I frame. The inserted frame is defined as the P frame that can be decoded independently of the I frame. A common P frame can be decoded only based on the I frame, and the inserted frame can be decoded independently. In the following embodiments of this application, a P' frame is for representing the inserted frame.

In embodiments of this application, for each viewpoint, the front-end encoder 1012 or the video processing server 1021 may perform interval encoding on a plurality of P frames in one GOP to obtain a corresponding P' frame. For example, FIG. 3 is a schematic structural diagram of comparison between one GOP obtained through encoding and an inserted frame stream according to an embodiment of this application. As shown in FIG. 3, the GOP includes an I frame and nine P frames located after the I frame. The nine P frames are respectively P-0 to P-8. Correspondingly, the inserted frame stream includes four P' frames. The four P' frames are respectively P'-1, P'-3, P'-5, and P'-7. A video image corresponding to a P'-1 frame is the same as a video image corresponding to a P-1 frame, a video image corresponding to a P'-3 frame is the same as a video image corresponding to a P-3 frame, a video image corresponding to a P'-5 frame is the same as a video image corresponding to a P-5 frame, and a video image corresponding to a P'-7 frame is the same as a video image corresponding to a P-7 frame. The P-0 frame is decoded depending on the I frame to obtain a video picture, the P-2 frame may be decoded depending on the P'-1 frame to obtain a video picture, the P-4 frame may be decoded depending on the P'-3 frame to obtain a video picture, the P-6 frame may be decoded depending on the P'-5 frame to obtain a video picture, and the P-8 frame may be decoded depending on the P'-7 frame to obtain a video picture.

A video processing server 1021 on a video server 102 side further generates a media content index (which may also be referred to as an OTT index) based on externally set data. The media content index is for describing information about each video stream, and the media content index is essentially a file that describes information about the video stream. The information about the video stream includes address information of the video stream, time information of the video stream, and the like. The address information of the video stream indicates an obtaining address of the video stream. For example, the address information of the video stream may be a uniform resource locator (uniform resource locator, URL) address corresponding to the video stream. The time information of the video stream indicates a start moment and an end moment of each video segment in the video stream. The start moment of the video segment may be a capture moment of a first frame of video pictures in the video segment, and the end moment of the video segment may be a capture moment of a last frame of video pictures in the video segment. Optionally, the media content index may further include viewpoint information. The viewpoint information includes a quantity of viewpoints (namely, a quantity of cameras on a media source side) and a viewpoint angle corresponding to each video stream. The viewpoint angle corresponding to the video stream is a viewpoint angle corresponding to a camera.

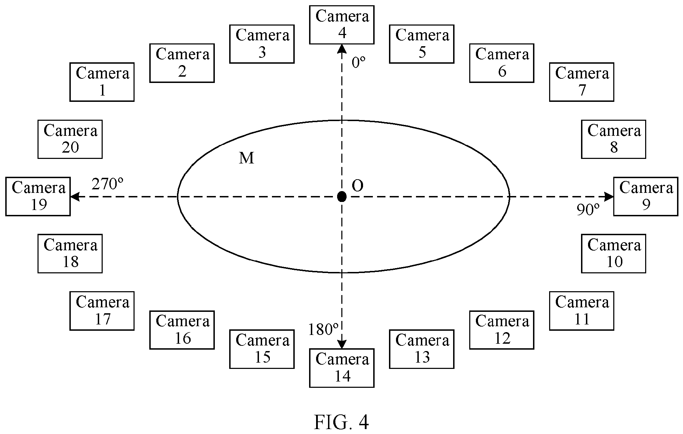

For example, FIG. 4 is a schematic diagram of a camera distribution scenario on a media source side according to an embodiment of this application. As shown in FIG. 4, the scenario includes 20 cameras, respectively denoted as a camera 1 to a camera 20. The 20 cameras are arranged in a circular manner, and are configured to shoot a same focus area M, and each shooting focus is a point O. A viewpoint angle corresponding to one of the cameras may be set to 0, and viewpoint angles corresponding to other cameras may be separately calculated correspondingly. For example, a viewpoint angle corresponding to a camera 4 may be set to 0°, and viewpoint angles corresponding to other cameras are separately calculated. In this case, a viewpoint angle corresponding to a camera 9 is 90°, a viewpoint angle corresponding to a camera 14 is 180°, and a viewpoint angle corresponding to a camera 19 is 270°.

A management personnel may input a quantity of cameras and a viewpoint angle corresponding to each camera into a video processing server, so that the video processing server generates a media content index. Optionally, the media content index in this embodiment of this application may be an m3u8 file (which may be referred to as a hypertext transfer protocol (hypertext transfer protocol, HTTP) live streaming (HTTP live streaming, HLS) index) or a media presentation description (media presentation description, MPD) file (which may be referred to as a dynamic adaptive streaming over HTTP (dynamic adaptive streaming over HTTP, DASH) index). The m3u8 file is an m3u file in an 8-bit unicode transformation format (8-bit unicode transformation format, UTF-8) encoding format.

In this embodiment of this application, a video stream may be transmitted between a video server 102 and a terminal 103 based on the hypertext transfer protocol (hypertext transfer protocol, HTTP). A process of the terminal obtaining video content from the video server includes: The terminal first downloads a media content index from the video server, and obtains information about the video stream by parsing the media content index. The terminal selects a video stream that needs to be played currently, extracts a URL address of the video stream from the media content index, and then sends a media content request to the video server by using the URL address of the video stream. After receiving the media content request, the video server sends the corresponding video stream to the terminal.

Optionally, still refer to FIG. 1. The video playback system may further include a network device 104, and the video server 102 may be connected to the terminal 103 via the network device 104. The network device 104 may be a gateway or another intermediate device. Certainly, the video server 102 may alternatively be directly connected to the terminal 103. This is not limited in this embodiment of this application.

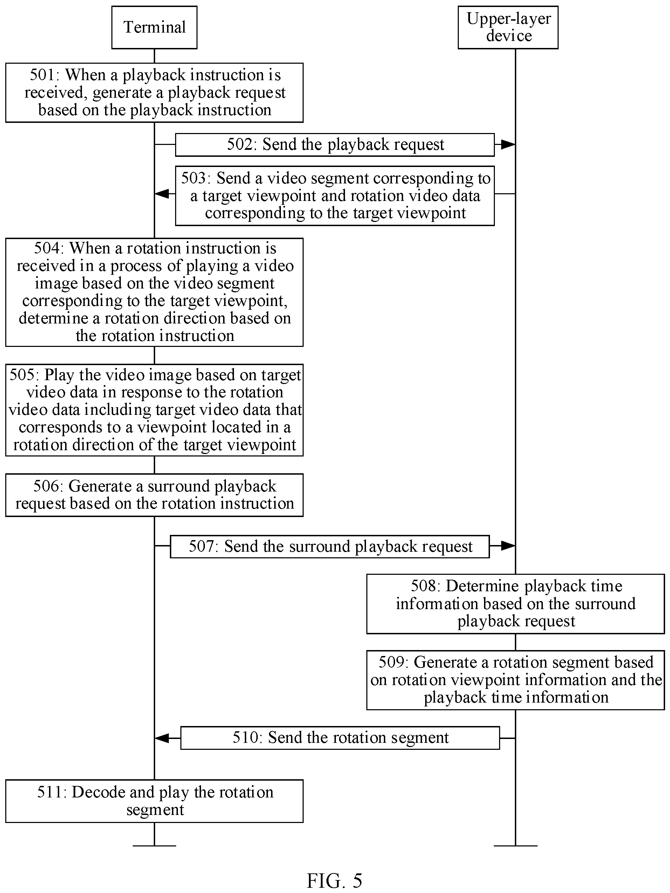

FIG. 5 is a schematic flowchart of a video playback method according to an embodiment of this application. The method may be applied to the video playback system shown in FIG. 1. As shown in FIG. 5, the method includes the following steps.

Step 501: When receiving a play instruction, the terminal generates a playback request based on the play instruction.

The playback request includes playback viewpoint information, and the playback viewpoint information indicates a target viewpoint for which playing is requested.

Optionally, the playback viewpoint information includes a URL address of a video stream corresponding to the target viewpoint. Alternatively, when a media content index obtained by the terminal includes viewpoint information, the playback viewpoint information may include an identifier of the target viewpoint. In this embodiment of this application, the playback request may also be referred to as a media content request.

Step 502: The terminal sends the play request to an upper-layer device.

In this embodiment of this application, the upper-layer device is an upstream device of the terminal. Optionally, the upper-layer device may be the video server 102 or the network device 104 in the video playback system shown in FIG. 1.

Step 503: The upper-layer device sends a video segment corresponding to the target viewpoint and rotation video data corresponding to the target viewpoint to the terminal.

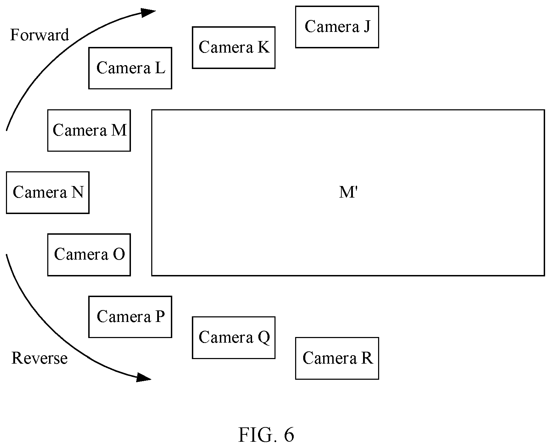

The rotation video data corresponding to the target viewpoint includes video data corresponding to a forward viewpoint and/or video data corresponding to a reverse viewpoint. The forward viewpoint includes one or more first viewpoints located in a clockwise direction of the target viewpoint. The reverse viewpoint includes one or more second viewpoints located in a counterclockwise direction of the target viewpoint For example, in the scenario shown in FIG. 3, it is assumed that the target viewpoint is the camera 4, the forward viewpoint may include a camera 5, a camera 6, a camera 7, and the like, and the reverse viewpoint may include a camera 3, a camera 2, a camera 1, and the like. For another example, FIG. 6 is another schematic diagram of a camera distribution scenario on a media source side according to an embodiment of this application. As shown in FIG. 6, the scenario includes nine cameras, respectively denoted as a camera J to a camera R. The nine cameras are arranged in a sector manner, and are configured to shoot a same focus area M'. It is assumed that the target viewpoint is a camera N, the forward viewpoint may include a camera M, a camera L, a camera K, and a camera J, and the reverse viewpoint may include a camera O, a camera P, a camera Q, and a camera R.

Alternatively, when the forward viewpoint includes one first viewpoint located in the clockwise direction of the target viewpoint, the video data corresponding to the forward viewpoint includes a video segment corresponding to the first viewpoint. When the forward viewpoint includes a plurality of first viewpoints located in the clockwise direction of the target viewpoint, video data corresponding to the forward viewpoint includes a video segment corresponding to each of the plurality of first viewpoints. Alternatively, the video data corresponding to the forward viewpoint is a forward rotation segment. The forward rotation segment includes a forward dynamic rotation fragment and/or a forward static rotation fragment. The forward dynamic rotation fragment includes a plurality of picture frame groups obtained based on video pictures in video segments corresponding to the plurality of first viewpoints, and each picture frame group in the forward dynamic rotation fragment is obtained based on a video picture in a video segment corresponding to one first viewpoint. The plurality of picture frame groups in the forward dynamic rotation fragment are arranged in a chronological order, and are arranged in ascending order of distances from the plurality of first viewpoints to the target viewpoint in a clockwise direction. The forward static rotation fragment includes a plurality of picture frame groups obtained based on video pictures in video segments corresponding to the plurality of first viewpoints, and each picture frame group in the forward static rotation fragment is obtained based on a video picture in a video segment corresponding to one first viewpoint. The plurality of picture frame groups in the forward static rotation fragment correspond to a same playback time period, and are arranged in ascending order of distances from the plurality of first viewpoints to the target viewpoint in a clockwise direction.

Alternatively, when the reverse viewpoint includes one second viewpoint located in the counterclockwise direction of the target viewpoint, the video data corresponding to the reverse viewpoint includes a video segment corresponding to the second viewpoint. When the reverse viewpoint includes a plurality of second viewpoints located in the counterclockwise direction of the target viewpoint, the video data corresponding to the reverse viewpoint includes a video segment corresponding to each of the plurality of second viewpoints. Alternatively, the video data corresponding to the reverse viewpoint is a reverse rotation segment. The reverse rotation segment includes a reverse dynamic rotation fragment and/or a reverse static rotation fragment. The reverse dynamic rotation fragment includes a plurality of picture frame groups obtained based on video pictures in video segments corresponding to the plurality of second viewpoints, and each picture frame group in the reverse dynamic rotation fragment is obtained based on a video picture in a video segment corresponding to one second viewpoint. The plurality of picture frame groups in the reverse dynamic rotation fragment are arranged in a chronological order, and are arranged in ascending order of distances from the plurality of second viewpoints to the target viewpoint in a counterclockwise direction. The reverse static rotation fragment includes a plurality of picture frame groups obtained based on video pictures in video segments corresponding to the plurality of first viewpoints, and each picture frame group in the reverse static rotation fragment is obtained based on a video picture in a video segment corresponding to one first viewpoint. The plurality of picture frame groups in the reverse static rotation fragment correspond to a same playback time period, and are arranged in ascending order of distances from the plurality of first viewpoints to the target viewpoint in a clockwise direction.

It should be noted that a difference between a dynamic rotation segment and a static rotation segment lies in that a plurality of picture frame groups included in the dynamic rotation segment are arranged in a chronological order, and a plurality of picture frame groups included in the static rotation segment correspond to a same playback time period; and the dynamic rotation segment may be used for surround playback in a video playback state, and the static rotation segment may be used for surround playback in a video pause state.

In this embodiment of this application, each picture frame group in a rotation segment includes one or more frames of video pictures, and each picture frame group can be independently decoded. Optionally, the picture frame group is a GOP. Alternatively, the picture frame group includes an inserted frame. Alternatively, the picture frame group includes a combination of an inserted frame and a P frame. The P frame is decoded depending on the inserted frame. Alternatively, the picture frame group includes a combination of an inserted frame, a P frame, and a B frame. The P frame is decoded depending on the inserted frame. The B frame is decoded depending on the inserted frame and the P frame.

In a first implementation, the picture frame group in the rotation segments is the GOP. For example, FIG. 7 is a schematic structural diagram of video segments that separately correspond to a plurality of viewpoints according to an embodiment of this application. As shown in FIG. 7, each of the camera J to the camera R in the scenario shown in FIG. 6 corresponds to a video segment a (corresponding to a time period T1), a video segment b (corresponding to a time period T2), and a video segment c (corresponding to a time period T3) that are arranged in a chronological order. Each video segment includes five GOPs, the video segment a includes GOPs numbered 1 to 5, the video segment b includes GOPs numbered 6 to 10, and the video segment c includes GOPs numbered 11 to 15.

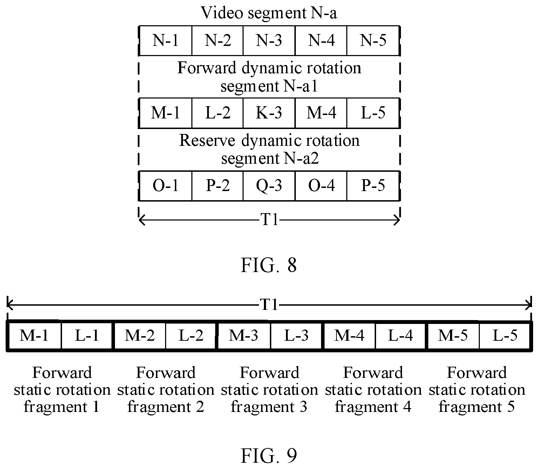

It is assumed that the target viewpoint is a camera N, the forward viewpoint includes a camera M, a camera L, and a camera K, the reverse viewpoint includes a camera O, a camera P, and a camera Q, and the rotation video data corresponding to the target viewpoint includes a forward dynamic rotation segment and a reverse dynamic rotation segment. In this case, media content in the time period T1 sent by the upper-layer device to the terminal may be shown in FIG. 8, and the media content includes a video segment N-a corresponding to the camera N, a forward dynamic rotation segment N-a1 corresponding to the camera N, and a reverse dynamic rotation segment N-a2 corresponding to the camera N. The video segment N-a corresponding to the camera N includes N-1 to N-5. The forward dynamic rotation segment N-a1 includes M-1, L-2, K-3, M-4, and L-5. The reverse dynamic rotation segment N-a2 include O-1, P-2, Q-3, O-4, and P-5. M-1, L-2, and K-3 form one forward dynamic rotation fragment, and M-4 and L-5 form another forward dynamic rotation fragment. In other words, the forward dynamic rotation segment N-a1 includes two forward dynamic rotation fragments. Correspondingly, O-1, P-2, and Q-3 form one reverse dynamic rotation fragment, and O-4 and P-5 form another reverse dynamic rotation fragment. In other words, the reverse dynamic rotation segment N-a2 includes two reverse dynamic rotation fragments.

FIG. 9 is a schematic structural diagram of forward static rotation segments according to an embodiment of this application. As shown in FIG. 9, still refer to the example in FIG. 7. A forward viewpoint corresponding to the camera N includes the camera M and the camera L, and the camera N corresponds to five forward static rotation fragments 1 to 5 in the time period T1. The five forward static rotation fragments 1 to 5 are in a one-to-one correspondence with N-1 to N-5 in time. A forward static rotation fragment 1 includes M-1 and L-1, a forward static rotation fragment 2 includes M-2 and L-2, a forward static rotation fragment 3 includes M-3 and L-3, a forward static rotation fragment 4 includes M-4 and L-4, and a forward static rotation fragment 5 includes M-5 and L-5. The forward static rotation fragment 1 is for performing clockwise surround playback when a video image is paused on a video picture corresponding to the N-1, and the forward static rotation fragment 2 is for performing clockwise surround playback when a video image is paused on a video picture corresponding to the N-2. Others are similar, and details are not described again in this embodiment of this application. For a structure of the reverse static rotation fragment, refer to a structure of the forward static rotation fragment.

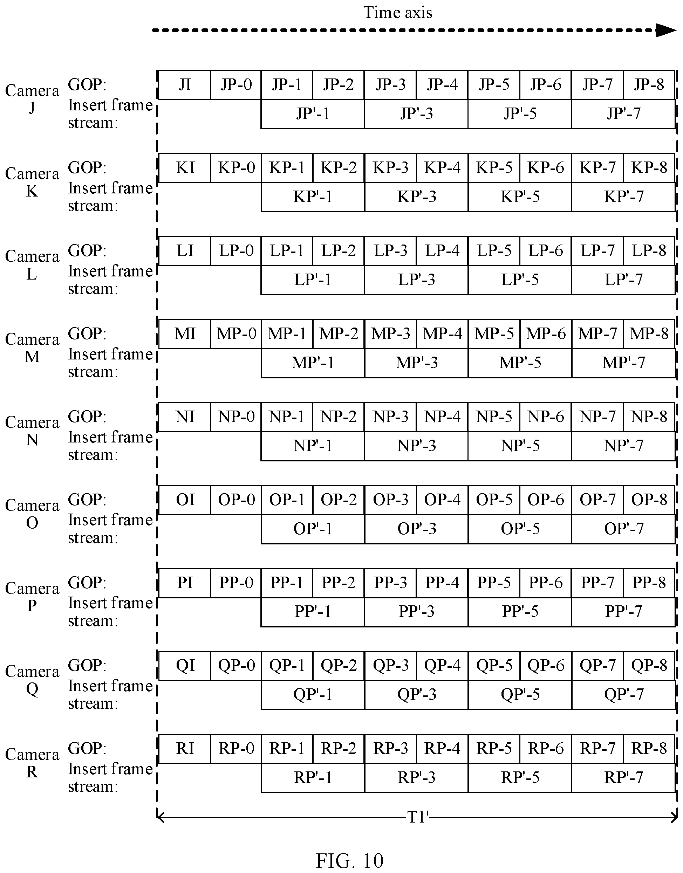

In a second implementation, when each viewpoint separately corresponds to a video stream (including a video segment) and an inserted frame stream, the picture frame group in the rotation segment may include the inserted frame (the P' frame). For example, FIG. 10 is a schematic structural diagram of video streams and inserted frame streams that separately correspond to a plurality of viewpoints according to an embodiment of this application. As shown in FIG. 10, each of the camera J to the camera R in the scenario shown in FIG. 6 corresponds to a video stream and an inserted frame stream, and the video stream includes a plurality of video segments (where only one GOP in a video segment is shown in FIG. 10). The GOP includes an I frame and eight P frames that are located after the I frame, and the eight P frames are respectively P-1 to P-8. The inserted frame streams include a plurality of P' frames obtained by performing interval encoding on a plurality of P frames in the GOP, and the plurality of P' frames include P'-1, P'-3, P'-5, and P'-7.

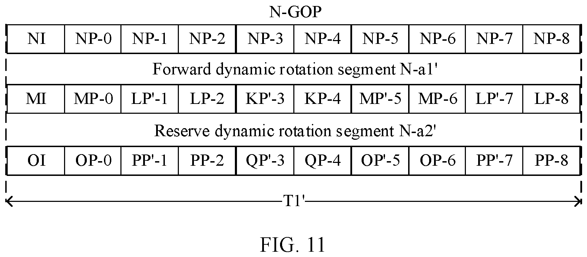

It is assumed that the target viewpoint is a camera N, the forward viewpoint includes a camera M, a camera L, and a camera K, the reverse viewpoint includes a camera O, a camera P, and a camera Q, and the rotation video data corresponding to the target viewpoint includes a forward dynamic rotation segment and a reverse dynamic rotation segment. In this case, media content in a time period T1' sent by the upper-layer device to the terminal may be shown in FIG. 11, and the media content includes an N-GOP corresponding to the camera N, a forward dynamic rotation segment N-a1' corresponding to the camera N, and a reverse dynamic rotation segment N-a2' corresponding to the camera N. The N-GOP corresponding to the camera N includes NI and NP-0 to NP-8. The forward dynamic rotation segment N-a1' includes MI, MP-0, LP'-1, LP-2, KP'-3, KP-4, MP'-5, MP-6, LP'-7, and LP-8. The inverse dynamic rotation segment N-a2' include OI, OP-0, PP'-1, PP-2, QP'-3, QP-4, OP'-5, OP-6, PP'-7, and PP-8. MI, MP-0, LP'-1, LP-2, KP'-3, and KP-4 form one forward dynamic rotation fragment. MP'-5, MP-6, LP'-7, and LP-8 form another forward dynamic rotation fragment. Correspondingly, OI, OP-0, PP'-1, PP-2, QP'-3, and QP-4 form one reverse dynamic rotation fragment, and OP'-5, OP-6, PP'-7, and PP-8 form another reverse dynamic rotation fragment.

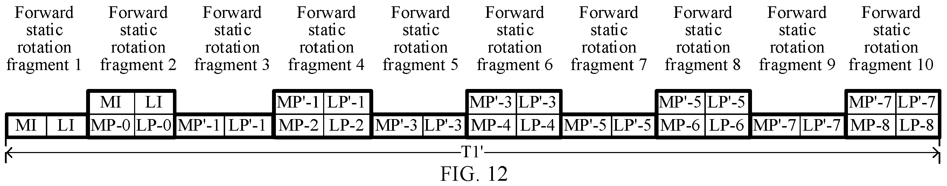

FIG. 12 is another schematic structural diagram of forward static rotation segments according to an embodiment of this application. As shown in FIG. 12, still refer to the example in FIG. 10. A forward viewpoint corresponding to the camera N includes the camera M and the camera L, and the camera N corresponds to 10 forward static rotation fragments 1 to 10 in the time period T1'. The 10 forward static rotation fragments 1 to 10 are in a one-to-one correspondence with 10 frames of video pictures in the N-GOP in time. A forward static rotation fragment 1 includes MI and LI, a forward static rotation fragment 2 includes MI, MP-0, LI, and LP-0 (where MIis used for MP-0 decoding and LI is used for LP-0 decoding), a forward static rotation fragment 3 includes MP'-1 and LP'-1, and a forward static rotation fragment 4 includes MP'-1, MP-2, LP'-1 and LP-2 (where MP'-1 is used for MP-2 decoding, LP'-1 is used for LP-2 decoding). Others are similar. Optionally, the forward static rotation fragment 2 may not include MI or LI, MP-0 is decoded depending on MI in the forward static rotation fragment 1, and the LP-0 is decoded depending on LI in the forward static rotation fragment 1. The forward static rotation fragment 4 may also not include MP'-1 and LP'-1, MP-2 is decoded depending on MP'-1 in the forward static rotation fragment 3, and LP-2 is decoded depending on LP'-1 in the forward static rotation fragment 3. Others are similar. In other words, a static rotation fragment corresponding to the P frame may be decoded based on a static rotation fragment corresponding to the I frame or the P' frame on which decoding of the P frame depends. The forward static rotation fragment 1 is for performing clockwise surround playback when a video image is paused on a video picture corresponding to NI, and the forward static rotation fragment 2 is for performing clockwise surround playback when a video image is paused on a video picture corresponding to NP-0. Others are similar, and details are not described again in this embodiment of this application. For a structure of the reverse static rotation fragment, refer to a structure of the forward static rotation fragment.

In the foregoing second implementation, because the rotation segment may be generated based on the inserted frame, a full I frame or a mini GOP does not need to be used in the video segment sent by the upper-layer device to the terminal, and a normal GOP may be used. Compared with the foregoing first implementation, a data volume of the video segment sent by the upper-layer device to the terminal can be reduced. In addition, a data volume of the inserted frame is usually less than a data volume of the I frame. Compared with the first implementation, data volumes of the forward rotation segment and the reverse rotation segment that are sent by the upper-layer device to the terminal can be reduced. Therefore, the second implementation can effectively reduce consumption of network transmission resources.

Optionally, after receiving the playback request sent by the terminal, the upper-layer device may send, in response to the playback request, the video segment corresponding to the target viewpoint and the rotation video data corresponding to the target viewpoint to the terminal. In other words, both the video segment corresponding to the target viewpoint and the rotation video data corresponding to the target viewpoint may be sent by the upper-layer device in response to the playback request.

Alternatively, after receiving the playback request sent by the terminal, the upper-layer device send only, in response to the playback request, the video segment corresponding to the target viewpoint to the terminal. The rotation preparation request is for requesting to obtain the rotation video data corresponding to the target viewpoint. The rotation preparation request is for requesting to obtain rotation video data corresponding to the target viewpoint. The upper-layer device sends the rotation video data corresponding to the target viewpoint to the terminal in response to receiving, by the upper-layer device, the rotation preparation request. In other words, the video segment corresponding to the target viewpoint is sent by the upper-layer device in response to the playback request, and the rotation video data corresponding to the target viewpoint is sent by the upper-layer device in response to the rotation preparation request. It should be noted that the terminal may simultaneously send the playback request and the rotation preparation request to the upper-layer device. Alternatively, the terminal may first send the playback request to the upper-layer device, and then send the rotation preparation request to the upper-layer device. This is not limited in this embodiment of this application. It should be noted that the rotation preparation request is sent by the terminal to the upper-layer device before the terminal receives the rotation instruction. In other words, the rotation preparation request is for pre-fetching rotation video data corresponding to a viewpoint for which playing is requested.

In this embodiment of this application, after receiving the playback request sent by the terminal, the upper-layer device may actively send, to the terminal, the rotation video data corresponding to the viewpoint for which playing is requested. Alternatively, after receiving the rotation preparation request sent by the terminal, the upper-layer device may send, in a passive response, the rotation video data to the terminal, where the rotation video data corresponds to the viewpoint for which playing is requested.

Optionally, the rotation preparation request includes one or more of a preparation rotation direction, a quantity of preparation rotation viewpoints, an identifier of a preparation rotation viewpoint, or a preparation rotation state, where the preparation rotation state includes a dynamic rotation state and/or a static rotation state, and content in the rotation preparation request is pre-configured in the terminal. The dynamic rotation state indicates to obtain the dynamic rotation segment, and the static rotation state indicates to obtain the static rotation segment. After receiving a preset trigger operation, the terminal may generate the rotation preparation request, and send the rotation preparation request to the upper-layer device. For example, when detecting that the video picture is displayed in a clockwise landscape mode, the terminal determines that the preparation rotation direction is a clockwise direction. In this case, the terminal may request, from the upper-layer device, the video data corresponding to the forward viewpoint. For example, when detecting that the video picture is displayed in a counterclockwise landscape mode, the terminal determines that the preparation rotation direction is a counterclockwise direction. In this case, the terminal may request, from the upper-layer device, the video data corresponding to the reverse viewpoint. For another example, the terminal may display a target button on a display interface. When detecting a touch operation on the target button, the terminal requests, from the upper-layer device, the rotation video data corresponding to the target viewpoint. For another example, the terminal may request corresponding rotation video data from the upper-layer device based on the historical behavior data of a user.

Step 504: When the terminal receives a rotation instruction in a process of playing a video image based on the video segment corresponding to the target viewpoint, the terminal determines a rotation direction based on the rotation instruction.

The rotation direction is a clockwise direction or a counterclockwise direction. That the terminal receives a rotation instruction in a process of playing a video image based on the video segment corresponding to the target viewpoint may be that the terminal receives the rotation instruction in a video playback state, or may be that the terminal receives the rotation instruction in a video pause playback state.

In an implementation, when the terminal detects a sliding operation on a video playback interface, the terminal determines that the rotation instruction is received. The terminal determines the rotation direction based on a sliding direction of the sliding operation. For example, a sliding direction to the left indicates a counterclockwise rotation, and a sliding direction to the right indicates a clockwise rotation.

In another implementation, when the terminal receives a target remote control instruction sent by a remote control device, the terminal determines that the rotation instruction is received. The terminal determines the rotation direction based on a button identifier in the target remote control instruction. For example, when remote control button information includes an identifier of a left button, it indicates that the rotation direction is a counterclockwise direction. When the remote control button information includes an identifier of a right button, it indicates that the rotation direction is a clockwise direction. Certainly, another button on the remote control device may be set to control the rotation direction. This is not limited in this embodiment of this application.

Step 505: In response to the rotation video data including target video data corresponding to a viewpoint located in the rotation direction of the target viewpoint, the terminal plays the video image based on the target video data.

In an implementation, the target video data is a target rotation segment. The target rotation segment includes a plurality of picture frame groups obtained based on video pictures in video segments corresponding to a plurality of viewpoints in the rotation direction of the target viewpoint. Each picture frame group in the target rotation segment is obtained based on a video picture in a video segment corresponding to one viewpoint in the rotation direction of the target viewpoint. The target rotation segment includes a dynamic rotation fragment in response to receiving, by the terminal, the rotation instruction in a video playback state. A plurality of picture frame groups in the dynamic rotation fragments are arranged in a chronological order and are arranged in ascending order of distances from a plurality of viewpoints to the target viewpoint in a rotation direction. In other words, the target rotation segment is a dynamic rotation segment. Alternatively, the target rotation segment includes a static rotation fragment in response to receiving, by the terminal, the rotation instruction in a video pause state. A plurality of picture frame groups in the static rotation fragment correspond to a same playback time period, and are arranged in ascending order of distances from the plurality of viewpoints the target viewpoint in the rotation direction. In other words, the target rotation segment is a static rotation segment.

Correspondingly, an implementation process of the terminal playing a video image based on the target video data includes: The terminal decodes and plays the target rotation segment. In a specific implementation, if the terminal receives the rotation instruction in a video playback state, and the rotation direction indicated by the rotation instruction is a clockwise direction, the terminal decodes and plays the forward dynamic rotation fragment corresponding to a playback moment. If the terminal receives the rotation instruction in a video playback state, and the rotation direction indicated by the rotation instruction is a counterclockwise direction, the terminal decodes and plays the reverse dynamic rotation fragments corresponding to a playback moment. If the terminal receives the rotation instruction in a video pause state, and the rotation direction indicated by the rotation instruction is a clockwise direction, the terminal decodes and plays the forward static rotation fragment corresponding to a video pause moment. If the terminal receives the rotation instruction in a video pause state, and the rotation direction indicated by the rotation instruction is a counterclockwise direction, the terminal decodes and plays the reverse static rotation fragment corresponding to a video pause moment.

In this implementation, when receiving the rotation instruction, the terminal may implement surround playback of a video image by decoding a pre-obtained rotation segment, and therefore a surround playback delay is low.

In another implementation, the target video data includes the video segment that separately corresponds to a plurality of viewpoints located in the rotation direction of the target viewpoint. An implementation process of the terminal playing a video image based on the target video data includes: The terminal separately generates picture frame groups based on video pictures in the video segments corresponding to the plurality of viewpoints. The terminal sequentially plays the video pictures in the generated picture frame groups in ascending order of distances from the plurality of viewpoints to the target viewpoint in the rotation direction.

In a specific implementation, if the terminal receives the rotation instruction in a video playback state, the terminal generates a plurality of picture frame groups of distances from the plurality of viewpoints located in the rotation direction of the target viewpoint to the target viewpoint, based on video pictures in a video segment corresponding to the plurality of viewpoints, a plurality of picture frame groups that are arranged in a chronological order, and each picture frame group is generated based on a video picture in a video segment corresponding to one viewpoint, and then sequentially plays the video pictures in the plurality of picture frame groups. For example, refer to the example shown in FIG. 7. The target viewpoint is the camera N, and the forward viewpoint includes the camera M and the camera L. The terminal is currently playing a video segment corresponding to the camera N. It is assumed that a rotation instruction is received when the video segment is played to N-2, and the rotation direction determined based on the rotation instruction is a clockwise direction. In this way, the terminal sequentially extracts, decodes, and plays M-3 in a video segment a corresponding to the camera M and L-4 in a video segment a corresponding to the camera L.

If the terminal receives the rotation instruction in a video pause state, the terminal separately generates picture frame groups based on video pictures that correspond to a video pause moment in the video segments corresponding to the plurality of viewpoints, and each picture frame group is generated based on a video picture that corresponds to the video pause moment in a video segment corresponding to one viewpoint, and then sequentially plays the video pictures in generated picture frame groups of distances from the plurality of viewpoints the target viewpoint in the rotation direction. For example, refer to the example shown in FIG. 7. The target viewpoint is the camera N, and the forward viewpoint includes the camera M and the camera L. A current video image of the terminal is paused at N-2 in a video segment a corresponding to the camera N. In this case, a rotation instruction is received. If a rotation direction determined based on the rotation instruction is a clockwise direction, the terminal separately extracts M-2 in the video segment a corresponding to the camera M and L-2 in the video segment a corresponding to the camera L, and sequentially decodes and plays M-2 and L-2.

Optionally, when the target video data includes only a video segment corresponding to one viewpoint in the rotation direction of the target viewpoint, the terminal directly decodes and plays a video image in the video segment corresponding to the viewpoint. If the terminal receives the rotation instruction in the video playback state, the terminal decodes and plays a video picture that corresponds to a next playback moment in the video segment corresponding to the viewpoint. For example, refer to the example shown in FIG. 7. The target viewpoint is the camera N, and the forward viewpoint includes the camera M. The terminal is currently playing a video segment corresponding to the camera N. It is assumed that a rotation instruction is received when the video segment is played to N-2, and the rotation direction determined based on the rotation instruction is a clockwise direction. In this case, the terminal decodes and plays M-3 in a video segment a corresponding to the camera M. If the terminal receives the rotation instruction in a video pause state, the terminal decodes and plays a video picture that corresponds to a video pause moment in the video segment corresponding to the viewpoint. For example, refer to the example shown in FIG. 7. The target viewpoint is the camera N, and the forward viewpoint includes the camera M and the camera L. A current video image of the terminal is paused at N-2 in a video segment a corresponding to the camera N. In this case, a rotation instruction is received. If a rotation direction determined based on the rotation instruction is a clockwise direction. The terminal decodes and plays M-2 in a video segment a corresponding to the camera M.

In this implementation, when the terminal receives the rotation instruction, the terminal may decode and play a pre-obtained video picture in a video segment corresponding to a viewpoint in the rotation direction, to implement surround playback of the video image, and therefore a surround playback delay is low.

In this embodiment of this application, the upper-layer device sends a video segment corresponding to the target viewpoint for which playing is requested by the terminal and the rotation video data corresponding to the target viewpoint to the terminal. After receiving the video segment corresponding to the target viewpoint, the terminal decodes the video segment to implement playback of a video image captured by the target viewpoint. When receiving a rotation instruction, the terminal may implement surround playback of the video image based on pre-obtained rotation video data, and therefore a surround playback delay is low. In addition, resolution of a played video image may be the same as resolution of a video picture in the video segment or a video picture in the rotation video data. Therefore, the video playback method provided in this embodiment of this application is not limited to a quantity of cameras used for front-end shooting, and has a wide application range. In addition, compared with a related technology, the upper-layer device does not need to always send, to the terminal, video images captured by all cameras, so that a data transmission volume can be reduced, and transmission resources can be saved.

Optionally, when receiving the rotation instruction, the terminal may further perform the following step 506 to step 511.

Step 506: The terminal generates a surround playback request based on the rotation instruction.

The surround playback request includes rotation viewpoint information, and the rotation viewpoint information indicates a rotation range. Alternatively, when the media content index obtained by the terminal includes the viewpoint information, after receiving the rotation instruction, the terminal may determine a start viewpoint, an end viewpoint, and a rotation direction based on the rotation instruction and the viewpoint information. In this case, the rotation viewpoint information may include an identifier of the start viewpoint, an identifier of the end viewpoint, and a rotation direction. Alternatively, after receiving the rotation instruction, the terminal may determine a rotation angle based on the rotation instruction. In this case, the rotation viewpoint information may include a rotation angle.

Optionally, when the terminal receives the rotation instruction in video playback state, the surround playback request generated by the terminal is for requesting to dynamic surround playback video content. In this case, the surround playback request is further for determining a playback start moment and a playback end moment. Optionally, the surround playback request further includes playback time information, and the playback time information includes one or more of a playback start moment, a playback end moment, or surround playback duration.

Optionally, when the terminal receives the rotation instruction in video playback state, the surround playback request generated by the terminal is for requesting to static surround playback video content. In this case, the surround playback request is further for determining a target playback moment. Optionally, the surround playback request includes the target playback moment, and the target playback moment may be a video pause moment. The static surround playback video content is performing surround playback of video images that correspond to target playback moments that are provided by a plurality of viewpoints.

In an implementation, when the terminal detects a sliding operation on a video playback interface, the terminal determines that the rotation instruction is received. The terminal determines rotation viewpoint information based on sliding information of the sliding operation. The sliding information includes one or more of a sliding start position, a sliding length, a sliding direction, or a sliding angle. Then, the terminal generates a surround playback request based on the rotation viewpoint information. The sliding start position, the sliding length, and the sliding direction may be for determining a start position, an end position, and a rotation direction. The sliding angle may be for determining a rotation angle.

Optionally, the sliding start position corresponds to the start position, the sliding direction corresponds to the rotation direction, and the sliding length is for defining a quantity of switched viewpoints. A sliding direction to the left indicates a counterclockwise rotation, and a sliding direction to the right indicates a clockwise rotation. When a sliding length reaches a unit length, a viewpoint is switched. For example, the unit length can be set to one centimeter. When the sliding length reaches three centimeters, three viewpoints are switched. The sliding sensitivity is negatively related to a specified value of unit length. To be specific, the smaller the specified value of unit length, the higher the sliding sensitivity. The sliding sensitivity can be set based on an actual requirement. For example, it is assumed that the sliding direction is rightward, the sliding length is five centimeters, and the unit length is 1 centimeter, five viewpoints are switched in a clockwise rotation direction. Refer to FIG. 4. It is assumed that a start viewpoint corresponding to a sliding start position is a camera 9, the terminal determines that the rotation direction is clockwise, and an end viewpoint is a camera 14.

Optionally, when the surround playback request is for requesting dynamic surround playback video content, the surround playback duration may be further defined by sliding duration. For example, the surround playback duration may be equal to the sliding duration.

Optionally, the sliding angle is for determining the rotation angle. The rotation angle and the sliding angle may be set to meet a specific relationship. For example, the rotation angle is equal to the sliding angle; or the rotation angle equal to twice the sliding angle, and others are similar. When the rotation viewpoint information includes the rotation angle, a positive or negative value of the rotation angle may further indicate the rotation direction. For example, if the rotation angle is positive, it indicates clockwise rotation. If the rotation angle is negative, it indicates counterclockwise rotation.

In another implementation, when the terminal receives a target remote control instruction sent by a remote control device, the terminal determines that the rotation instruction is received. The target remote control instruction includes remote control button information, and the remote control button information includes a button identifier and/or a quantity of button times. The terminal determines the rotation viewpoint information based on the remote control button information. Then, the terminal generates a surround playback request based on the rotation viewpoint information. The button identifier may be for determining a rotation direction. The quantity of button times can be for determining a quantity of switching viewpoints.

Optionally, the rotation direction is determined based on a button identifier. For example, when remote control button information includes an identifier of a left button, it indicates that the rotation direction is a counterclockwise direction. When remote control button information includes an identifier of a right button, it indicates that the rotation direction is a clockwise direction. Certainly, another button on the remote control device may be set to control the rotation direction. This is not limited in this embodiment of this application. The quantity of button times is for defining the quantity of switching viewpoints. For example, if a quantity of button times is one, one viewpoint is switched. For example, it is assumed that the remote control button information includes the identifier of the left button, and the quantity of button times is three, three viewpoints are switched in a counterclockwise rotation. Refer to FIG. 4. It is assumed that the start viewpoint is a camera 9, the terminal determines, based on the button identifier, that the rotation direction is counterclockwise, and determines, based on the quantity of button times, that the quantity of switching viewpoints is three, and further determines that an end viewpoint is a camera 6.

Optionally, when the surround playback request is for requesting dynamic surround playback video content, the surround playback duration may be further defined by button duration. For example, the surround playback duration may be equal to the button duration.

Step 507: The terminal sends the surround playback request to an upper-layer device.

Step 508: The upper-layer device determines playback time information based on the surround playback request.

In an optional embodiment of this application, the surround playback request is for requesting to dynamic surround playback video content, and the playback time information includes a playback start moment and a playback end moment. Implementations in which the upper-layer device determines the playback time information based on the surround playback request include the following five implementations:

In a first implementation, an implementation process of step 508 includes: The upper-layer device determines, a playback start moment and a playback end moment based on a preset policy and a moment at which the surround playback request is received. The preset policy includes preset surround playback duration.

Optionally, the preset policy defines a video playback time when the upper-layer device receives the surround playback request is used as the playback start time, and duration of an interval between the playback end time and the playback start time is equal to preset surround playback duration. For example, when the upper-layer device receives the surround playback request, the video playback time is 00:19:35, and the preset surround playback duration is two seconds, the upper-layer device determines that the playback start time is 00:19:35 and the playback end time is 00:19:37. Alternatively, it may be defined in the preset policy that a video playback time that is later than the receiving time (corresponding to the video playback time) of the surround playback request by specific duration is used as the playback start time. The playback start time may be prior to the receiving time of the surround playback request in a time sequence, or the playback start moment may also be located after the receiving moment of the surround playback request in time sequence. For example, the receiving moment of the surround playback request is 00:19:35, and the playback start moment may be 00:19:34, or the playback start moment may be 00:19:36.

In a second implementation, the surround playback request includes a playback start moment and a playback end moment. An implementation process of step 508 includes: The upper-layer device identifies the playback start moment and the playback end moment in the surround playback request.

Optionally, a specified field of the surround playback request is predefined or preconfigured to carry a playback start moment and a playback end moment. The predefined definition may be defined in a standard or a protocol. The pre-configuration may be pre-negotiation between the upper-layer device and the terminal. After receiving the surround playback request, the upper-layer device may identify the playback start time and playback end time from the specified field. For example, if the specified field of the surround playback request carries two moments: 00:19:35 and 00:19:37, the upper-layer device determines that the playback start moment is 00:19:35 and the playback end moment is 00:19:37.

In a third implementation, the surround playback request includes a playback start moment. An implementation process of step 508 includes: The upper-layer device determines a playback end moment based on the playback start moment and preset surround playback duration. For example, if the playback start moment carried in the surround playback request is 00:19:35, and the preset surround playback duration is two seconds, the upper-layer device determines that the playback end moment is 00:19:37.

In a fourth implementation, the surround playback request includes the surround playback duration. An implementation process of step 508 includes: The upper-layer device determines a playback start moment and a playback end moment based on the moment at which the surround playback request is received and the surround playback duration. For this implementation, refer to the foregoing first implementation. Details are not described herein again in this embodiment of this application.

In a fifth implementation, the surround playback request includes a playback start moment and surround playback duration. An implementation process of step 508 includes: The upper-layer device determines a playback end moment based on the playback start moment and surround playback duration. For example, if the playback start moment carried in the surround playback request is 00:19:35, and the surround playback duration is two seconds, the upper-layer device determines that the playback end moment is 00:19:37.

In an optional embodiment of this application, the surround playback request is for requesting to static surround playback video content, and the playback time information includes a target playback moment. Optionally, the surround playback request includes the target playback moment. Alternatively, the surround playback request does not include the target playback moment, and the upper-layer device determines the target playback moment based on the moment at which the surround playback request is received. For a manner in which the upper-layer device determines the target playback moment, refer to a manner in which the upper-layer device determines the playback start moment in the foregoing first implementation. Details are not described herein again in this embodiment of this application.

Step 509: The upper-layer device generates a rotation segment based on the rotation viewpoint information and the playback time information.

The rotation segment includes picture frame groups corresponding to a plurality of viewpoints in a rotation range. Optionally, the rotation segment successively includes the picture frame groups corresponding to a plurality of viewpoints from the start viewpoint to the end viewpoint in a rotation direction.

Optionally, the upper-layer device first determines a start viewpoint, an end viewpoint, and a rotation direction based on the rotation viewpoint information, and then determines a plurality of viewpoints from the viewpoints of the start viewpoint to the end viewpoint in the rotation direction.

Optionally, when the rotation viewpoint information includes the identifier of the start viewpoint, the identifier of the end viewpoint, and the rotation direction, after receiving the surround playback request, the upper-layer device may determine the start viewpoint, the end viewpoint, and the rotation direction based on content in the rotation viewpoint information. When the rotation viewpoint information includes the rotation angle, after receiving the surround playback request, the upper-layer device determines the end viewpoint and the rotation direction based on the start viewpoint and the rotation angle. For example, refer to FIG. 4. It is assumed that the start viewpoint determined by the upper-layer device is the camera 9, and the rotation angle carried in the surround playback request is -90°. In this case, the upper-layer device determines that the rotation direction is counterclockwise, and the end viewpoint is the camera 4.

Optionally, the plurality of viewpoints determined by the upper-layer device may include all or some viewpoints from a start viewpoint to an end viewpoint in a rotation direction. For example, refer to FIG. 4. It is assumed that start viewpoint is a camera 9, the end viewpoint is a camera 14, and the rotation direction is a clockwise direction, the plurality of viewpoints determined by the upper-layer device successively include the camera 9, the camera 10, the camera 11, the camera 12, the camera 13, and the camera 14. Alternatively, when the surround playback request is for requesting static surround playback of the video content, the plurality of viewpoints determined by the upper-layer device may include some viewpoints from the start viewpoint to the end viewpoint in the rotation direction. For example, it is assumed that the union of the shooting area of the camera 11 and the shooting area of the camera 13 in FIG. 3 completely covers the shooting area of the camera 12, the plurality of viewpoints determined by the upper-layer device may not include the shooting area of the camera 12. When the video images captured by the camera 9 to the camera 14 are statically played in a surround mode, because the video images shot by the camera 11 and the video images shot by the camera 13 include the video images shot by the camera 12, a sudden change of the video images in the surround playback process is not caused, and smoothness of the surround playback images can be ensured.

In an optional embodiment of this application, the surround playback request is for requesting to dynamic surround playback video content.

In an implementation, the picture frame group in the rotation segment is a GOP. An implementation process of step 509 includes the following steps.

In step 5091A1, the upper-layer device obtains m video segments corresponding to each of the plurality viewpoints from a playback start moment to a playback end moment, where m is a positive integer.

For example, it is assumed that the plurality of viewpoints successively include q viewpoints in a rotation direction, a playback start moment is t1, a playback end moment is t2, q is an integer greater than 0, and t2 > t1. A video stream corresponding to each viewpoint includes m video segments in a time period (t1, t2). In this case, the upper-layer device separately obtains m video segments corresponding to the q viewpoints in the time period (t1, t2).

In step 5092A1, the upper-layer device extracts, based on the playback time information, one or more GOPs from the m video segments corresponding to each viewpoint.

Optionally, the upper-layer device determines, based on the surround playback duration and the quantity of the plurality of viewpoints, a GOP extraction moment and a quantity of GOP extractions corresponding to each viewpoint. The surround playback duration is equal to a difference between a playback end moment and a playback start moment. The upper-layer device extracts, based on a GOP extraction moment and a quantity of GOP extractions corresponding to each viewpoint, the GOP from the m video segments corresponding to each viewpoint.

In the two viewpoints arranged along the rotation direction, a GOP extraction moment corresponding to a previous viewpoint is located before a GOP extraction moment corresponding to a next viewpoint in a time sequence. The quantity of GOP extractions corresponding to each stand is equal to the ratio of the surround playback duration, the GOP duration, and the quantity of stands (this ratio can be rounded up or down).

For example, still refer to the example in step 5091A. It is assumed that a time length of each GOP is t, and a quantity of GOP extractions corresponding to each viewpoint is equal to (t2 - t1)/(q*t).

In step 5093A1, the upper-layer device assembles the extracted GOP to obtain a rotation segment.

Optionally, the upper-layer device sequentially assembles the extracted GOPs based on a rotation direction, to obtain a rotation segment. The rotation segment is a dynamic rotation segment.

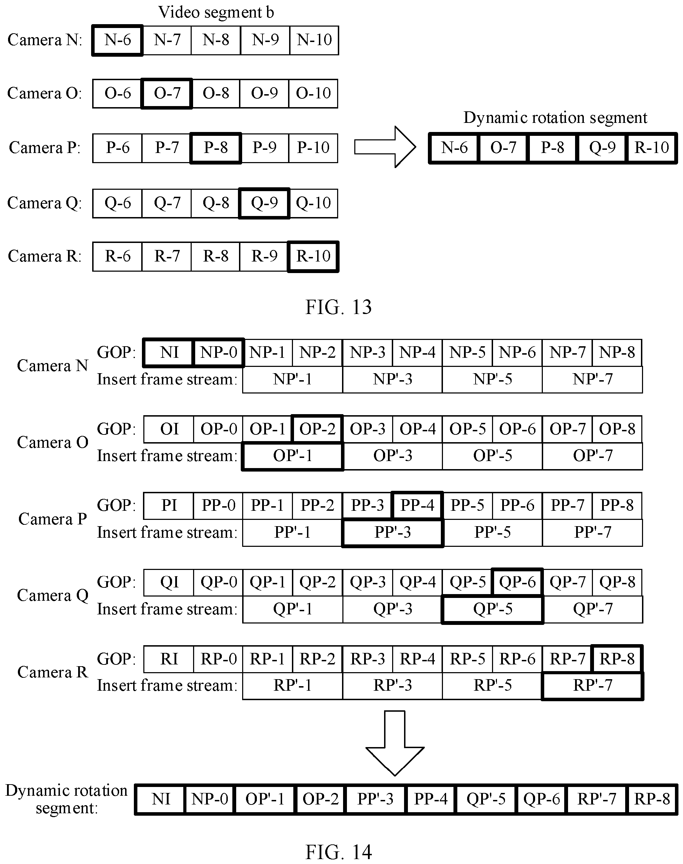

For example, refer to the example shown in FIG. 7. It is assumed that the playback start moment is a start moment of the time period T2, the playback end moment is an end moment of the time period T2, the start point is a camera N, the end point is a camera R, and the rotation direction is a counterclockwise direction. A video segment b corresponding to each viewpoint includes five GOPs, and a quantity of extracted GOPs corresponding to each viewpoint is one. FIG. 13 is a schematic diagram of a process of generating a dynamic rotation segment according to an embodiment of this application. As shown in FIG. 13, a GOP extracted by the upper-layer device from the video segment b corresponding to the camera N is N-6, a GOP extracted from the video segment b corresponding to the camera O is O-7, and a GOP extracted from the video segment b corresponding to the camera P is P-8. The GOP extracted from the video segment b corresponding to the camera Q is Q-9, and the GOP extracted from the video segment b corresponding to the camera R is R-10. Then, the upper-layer device sequentially assembles, based on the rotation direction, the GOP extracted from the video segment corresponding to the five viewpoints, to obtain a dynamic rotation segment.

In another implementation, a picture frame group in the rotation segment is generated based on an inserted frame. An implementation process of step 509 includes the following steps.

In step 5091A2, the upper-layer device obtains m video segments corresponding to each of the plurality viewpoints from a playback start moment to a playback end moment, where m is a positive integer.

For an explanation of this step, refer to the foregoing step 5091A1. Details are not described herein again in this embodiment of this application.

In step 5092A2, the upper-layer device extracts, based on the playback time information, one or more frames of video pictures from the m video segments corresponding to each viewpoint.

Optionally, the upper-layer device determines, based on the surround playback duration and the quantity of the plurality of viewpoints, a video picture extraction moment and a quantity of extracted video picture corresponding to each viewpoint. The surround playback duration is equal to a difference between a playback end moment and a playback start moment. The upper-layer device extracts, based on a video picture extraction moment and a quantity of extracted video picture corresponding to each viewpoint, the video picture from the m video segments corresponding to each viewpoint.

In the two viewpoints arranged along the rotation direction, a video picture extraction moment corresponding to a previous viewpoint is located before a video picture extraction moment corresponding to a next viewpoint in a time sequence. The quantity of extracted video picture corresponding to each stand is equal to the ratio of the surround playback duration, the video picture duration, and the quantity of stands (this ratio can be rounded up or down).

In step 5093A2, for each of the plurality of viewpoints, the upper-layer device generates a picture frame group based on the inserted frame stream corresponding to the viewpoint and the extracted video pictures, and assembles the picture frame group corresponding to the plurality of viewpoints to obtain a rotation segment.

Optionally, the upper-layer device sequentially assembles the generated picture frame group based on the rotation direction, to obtain a rotation segment. The rotation segment is a dynamic rotation segment.

For example, refer to the example shown in FIG. 12. It is assumed that the playback start moment is a start moment of the time period T1', the playback end moment is an end moment of the time period T1', the start point is a camera N, the end point is a camera R, and the rotation direction is a counterclockwise direction, and a quantity of extracted video picture corresponding to each viewpoint is two. FIG. 14 is a schematic diagram of a process of generating another dynamic rotation segment according to an embodiment of this application. As shown in FIG. 14, an upper-layer device extracts a video picture NI and a video picture NP-0 from a GOP corresponding to a camera N, extracts a video picture OP'-1 from an inserted frame stream corresponding to a camera O, and extracts a video picture OP-2 from a GOP corresponding to a camera O. The video picture PP'-3 is extracted from the inserted frame stream corresponding to the camera P and the video picture PP-4 is extracted from the GOP corresponding to the camera P. The video picture QP'-5 is extracted from the inserted frame stream corresponding to the camera Q and the video picture QP-6 is extracted from the GOP corresponding to the camera Q. The video picture RP'-7 is extracted from the inserted frame stream corresponding to the camera R and the video picture RP-8 is extracted from the GOP corresponding to the camera R. NI and NP-0 are picture frame groups corresponding to the camera N, OP'-1 and OP-2 are picture frame groups corresponding to the camera O, and PP'-3 and PP-4 are picture frame groups corresponding to the camera P. QP'-5 and QP-6 are picture frame groups corresponding to camera Q, and RP'-7 and RP-8 are picture frame groups corresponding to camera R. The upper-layer device sequentially assembles, based on the rotation direction, the picture frame groups corresponding to the five viewpoints, to obtain dynamic rotation segments.

In another optional embodiment of this application, the surround playback request is for requesting to static surround playback video content.

In an implementation, the picture frame groups in the rotation segment are a GOP, and each GOP include one frame of a video picture. An implementation process of step 509 includes the following steps.

In step 5091B 1, the upper-layer device obtains a target video segment corresponding to each of the plurality of viewpoints. A time period corresponding to the target video fragment includes a target playback moment.

The time period corresponding to the target video segment includes the target playback moment, and it means that the target playback moment is between a start moment and an end moment of the target video segment.

In step 5092B 1, the upper-layer device extracts, from the target video segment corresponding to each viewpoint, one GOP corresponding to the target playback moment.

One GOP corresponding to the target playback moment means that a capture moment of a video picture in the GOP is the target playback moment.

In step 5093B 1, the upper-layer device assembles the extracted GOP to obtain a rotation segment.

Optionally, the upper-layer device sequentially assembles the extracted GOPs based on a rotation direction, to obtain a rotation segment. The rotation segment is a static rotation segment.

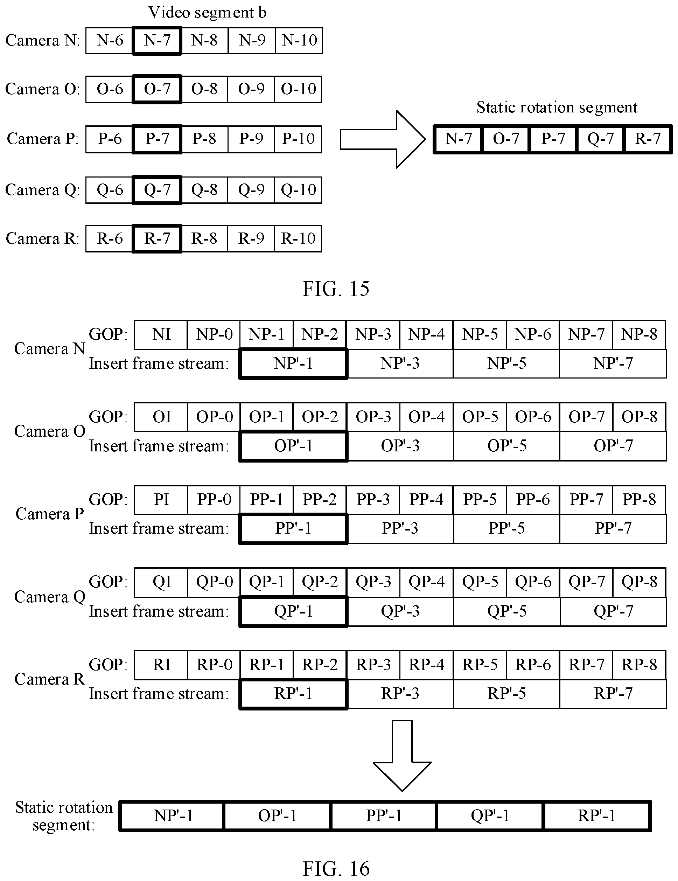

For example, refer to the example shown in FIG. 7. A start camera viewpoint is the camera N, an end camera viewpoint is the camera R, a GOP M-7 in a video segment b corresponding to the camera M is played at a target playback moment, and a rotation direction is a counterclockwise direction. FIG. 15 is a schematic diagram of a process of generating a static rotation segment according to an embodiment of this application. As shown in FIG. 15, a GOP extracted by the upper-layer device from the video segment b corresponding to the camera N is N-7, a GOP extracted from the video segment b corresponding to the camera O is O-7, and a GOP extracted from the video segment b corresponding to the camera P is P-7. The GOP extracted from the video segment b corresponding to the camera Q is Q-7, and the GOP extracted from the video segment b corresponding to the camera R is R-7. Then, the upper-layer device sequentially assembles, based on the rotation direction, the GOP extracted from the video segment corresponding to the five viewpoints, to obtain a static rotation segment.

In another implementation, a picture frame group in the rotation segment is generated based on an inserted frame. An implementation process of step 509 includes the following steps.

In step 5091B2, the upper-layer device obtains a target video segment corresponding to each of the plurality of viewpoints. A time period corresponding to the target video fragment includes a target playback moment.

The time period corresponding to the target video segment includes the target playback moment, and it means that the target playback moment is between a start moment and an end moment of the target video segment.

In step 5092B2, the upper-layer device extracts, from the target video segment corresponding to each viewpoint, one frame of a video picture corresponding to the target playback moment.

The one frame of a video picture corresponding to the target playback moment means that a capture moment of a video picture in the one frame of a video picture is the target playback moment.

In step 5093B2, for each of the plurality of viewpoints, the upper-layer device generates a picture frame group based on the inserted frame stream corresponding to the viewpoint and the extracted video pictures, and assembles the picture frame group corresponding to the plurality of viewpoints to obtain a rotation segment.

If the extracted video picture is an I frame, the picture frame group includes the I frame. If the extracted video picture is not an I frame and the video image corresponds to an inserted frame, the picture frame group includes the inserted frame corresponding to the video picture. If the extracted video picture is not an I frame and the video picture has no corresponding inserted frame, the picture frame group includes the video picture and the I frame or inserted frame on which decoding of the video picture depends.

Optionally, the upper-layer device sequentially assembles the generated picture frame group based on the rotation direction, to obtain a rotation segment. The rotation segment is a static rotation segment.

For example, refer to the example shown in FIG. 12. A start viewpoint is the camera N, an end viewpoint is the camera R, and MP-1 in a GOP corresponding to the camera M is played at a target playback moment. FIG. 16 is a schematic diagram of a process of generating another static rotation segment according to an embodiment of this application. As shown in FIG. 16, the upper-layer device extracts the inserted frame NP'-1 from the inserted frame stream corresponding to the camera N, extracts the inserted frame OP'-1 from the inserted frame stream corresponding to the camera O, and extracts the inserted frame PP'-1 from the inserted frame stream corresponding to the camera P. The inserted frame QP'-1 is extracted from the inserted frame stream corresponding to the camera Q, and the inserted frame RP'-1 is extracted from the inserted frame stream corresponding to the camera R. The upper-layer device sequentially assembles, based on the rotation direction, the video pictures corresponding to the five viewpoints, to obtain a static rotation segment.

Optionally, a quantity of picture frame groups included in the rotation segment may be the same as or different from a quantity of picture frame groups included in another video segment. For example, a quantity of picture frame groups included in the rotation segment may be less than or greater than a quantity of picture frame groups included in another video segment. This is not limited in this embodiment of this application.

Optionally, when the upper-layer device is a network device, after receiving the surround playback request, the upper-layer device first downloads the media content index from the video server, and obtains the information about the video stream by parsing the media content index. The upper-layer device extracts, from the media content index, the URL address of the video stream corresponding to each of the plurality of viewpoints, and then obtains the corresponding video segment by using the URL of the video stream.

Step 510: An upper-layer device sends a rotation segment to a terminal.

Optionally, when the surround playback request is for requesting to dynamic surround playback video content, after sending the rotation segment to the terminal, the upper-layer device continues to send the video segment corresponding to the end viewpoint to the terminal, so that the terminal can smoothly switch from the playback image corresponding to the start viewpoint to the playback image corresponding to the end viewpoint. Alternatively, when the surround playback request is for requesting to request static surround playback video content, after sending the rotation segment to the terminal. The upper-layer device stops sending video data to the terminal.

Step 511: The terminal decodes and plays the rotation segment.

The terminal decodes and plays the rotation segment to implement surround playback of video images corresponding to a plurality of viewpoints in the rotation direction from the start viewpoint to the end viewpoint. The resolution of the video image played by the terminal may be the same as the resolution of the video picture in the rotation segment.

A sequence of steps of the method provided in this embodiment of this application can be properly adjusted. For example, step 506 and step 507 may be performed simultaneously with step 505. In other words, after receiving the rotation instruction, the terminal may play the video image based on pre-obtained rotation video data, generates and sends a surround playback request to the upper-layer device. Steps can also be added or deleted based on an actual situation. Any variation method readily figured out by a person skilled in the art within the technical scope disclosed in this application shall fall within the protection scope of this application. Therefore, details are not described herein.

In conclusion, in the video playback method provided in this embodiment of this application, the upper-layer device sends a video segment corresponding to the target viewpoint for which playing is requested by the terminal and the rotation video data corresponding to the target viewpoint to the terminal. After receiving the video segment corresponding to the target viewpoint, the terminal decodes the video segment to implement playback of a video image captured by the target viewpoint. When receiving a rotation instruction, the terminal may implement the surround playback of the video image based on pre-obtained rotation video data, and therefore a surround playback delay is low. In addition, resolution of a played video image may be the same as resolution of a video picture in the video segment or a video picture in the rotation video data. Therefore, the video playback method provided in this embodiment of this application is not limited to a quantity of cameras used for front-end shooting, and has a wide application range. In addition, compared with a related technology, the upper-layer device does not need to always send, to the terminal, video images captured by all cameras, so that a data transmission volume can be reduced, and transmission resources can be saved. In addition, the rotation segment may be generated based on the inserted frames. In this case, a full I frame or a mini GOP does not need to be used in the video segment sent by the upper-layer device to the terminal, and a normal GOP may be used. This may reduce a data volume of the video segment sent by the upper-layer device to the terminal. In addition, a data volume of the inserted frames is usually less than a data volume of the I frame. This may reduce a data volume of the rotation segment sent by the upper-layer device to the terminal. Therefore, that the rotation segment is generated by using an inserted frame technology can effectively reduce consumption of network transmission resources.

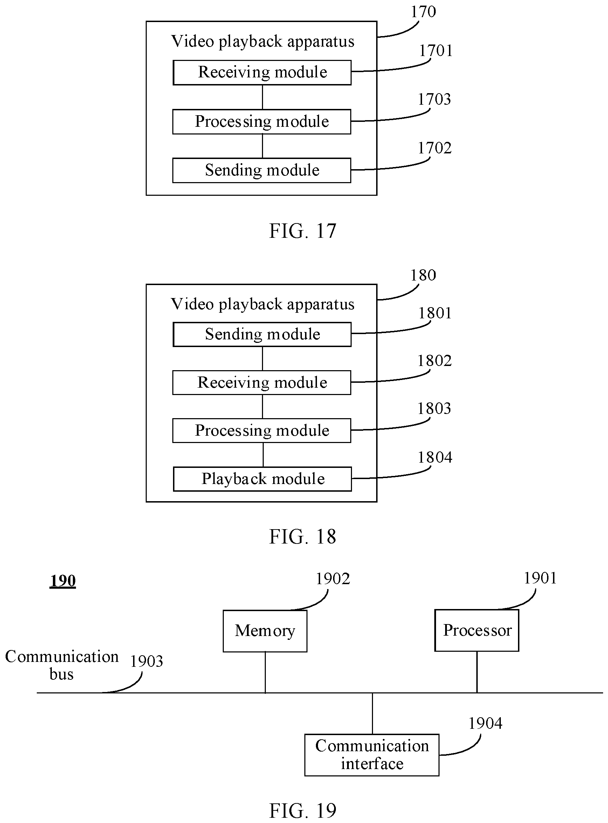

FIG. 17 is a schematic structural diagram of a video playback apparatus according to an embodiment of this application. The apparatus is used in an upper-layer device. For example, the upper-layer device may be the video server or the network device in the video playback system shown in FIG. 1. As shown in FIG. 17, the apparatus 170 includes:
a receiving module 1701, configured to receive a playback request sent by a terminal, where the playback request includes playback viewpoint information, and the playback viewpoint information indicates a target viewpoint for which playing is requested; and
a sending module 1702, configured to send a video segment corresponding to the target viewpoint and rotation video data corresponding to the target viewpoint to the terminal, where the rotation video data includes video data corresponding to a forward viewpoint and/or video data corresponding to a reverse viewpoint, the forward viewpoint includes one or more first viewpoints located in a clockwise direction of the target viewpoint, and the reverse viewpoint includes one or more second viewpoints located in a counterclockwise direction of the target viewpoint.

Optionally, the sending module 1702 is configured to: in response to receiving, by the upper-layer device, a rotation preparation request sent by the terminal, the upper-layer device sends the rotation video data to the terminal. The rotation preparation request is for requesting to obtain the rotation video data corresponding to the target viewpoint. Alternatively, in response to the playback request, the upper-layer device sends the rotation video data to the terminal.

Optionally, the video data corresponding to the forward viewpoint includes a video segment corresponding to each first viewpoint; or the forward viewpoint includes a plurality of first viewpoints located in a clockwise direction of the target viewpoint, the video data corresponding to the forward viewpoint is a forward rotation segment, and the forward rotation segment includes a forward dynamic rotation fragment and/or a forward static rotation fragment. The forward dynamic rotation fragment includes a plurality of picture frame groups obtained based on video pictures in video segments corresponding to the plurality of first viewpoints, and each picture frame group in the forward dynamic rotation fragment is obtained based on a video picture in a video segment corresponding to one first viewpoint, the plurality of picture frame groups in the forward dynamic rotation fragment are arranged in a chronological order, and are arranged in ascending order of distances from the plurality of first viewpoints to the target viewpoint in a clockwise direction; the forward static rotation fragment includes a plurality of picture frame groups obtained based on video pictures in video segments corresponding to the plurality of first viewpoints, and each picture frame group in the forward static rotation fragment is obtained based on a video picture in a video segment corresponding to one first viewpoint. The plurality of picture frame groups in the forward static rotation fragment correspond to a same playback time period, and are arranged in ascending order of distances from the plurality of first viewpoints to the target viewpoint in the clockwise direction.

Optionally, the video data corresponding to the reverse viewpoint includes a video segment corresponding to each second viewpoint; or the reverse viewpoint includes a plurality of second viewpoints located in a counterclockwise direction of the target viewpoint, the video data corresponding to the reverse viewpoint is a reverse rotation segment, and the reverse rotation segment includes a reverse dynamic rotation fragment and/or a reverse static rotation fragment. The reverse dynamic rotation fragment includes a plurality of picture frame groups obtained based on video pictures in video segment corresponding to the plurality of second viewpoints, and each picture frame group in the reverse dynamic rotation fragment is obtained based on a video picture in a video segment corresponding to one second viewpoint, the plurality of picture frame groups in the reverse dynamic rotation fragment are arranged in a chronological order, and are arranged in ascending order of distances from the plurality of second viewpoints the target viewpoint in a counterclockwise direction; the reverse static rotation fragment includes a plurality of picture frame groups obtained based on video pictures in video segments corresponding to the plurality of second viewpoints, and each picture frame group in the reverse static rotation fragment is obtained based on a video picture a video segment corresponding to one second viewpoint. The plurality of picture frame groups in the reverse static rotation fragment correspond to a same playback time period, and are arranged in ascending order of distances from the plurality of second viewpoints to the target viewpoint in a clockwise direction.

The picture frame groups each include one or more frames of video pictures, and each picture frame group can be independently decoded.

Optionally, still refer to FIG. 17. The apparatus 170 further includes a processing module 1703.

The receiving module 1701 is further configured to receive a surround playback request sent by the terminal. The surround playback request includes rotation viewpoint information, and the rotation viewpoint information indicates a rotation range. The processing module 1703 is configured to determine playback time information based on the surround playback request, and generate a rotation segment based on the rotation viewpoint information and the playback time information, the rotation segment includes picture frame groups corresponding to a plurality of viewpoints in the rotation range, the picture frame groups each include one or more frames of video pictures, and each picture frame group can be independently decoded. The sending module 1702 is further configured to send the rotation segment to the terminal.

Optionally, the picture frame group is a GOP; the picture frame group includes an inserted frame; the picture frame group includes a combination of an inserted frame and a P frame; or the picture frame group includes a combination of an inserted frame, a P frame, and a B frame.

Optionally, the rotation preparation request includes one or more of a preparation rotation direction, a quantity of preparation rotation viewpoints, an identifier of a preparation rotation viewpoint, or a preparation rotation state, where the preparation rotation state includes a dynamic rotation state and/or a static rotation state, and content in the rotation preparation request is pre-configured in the terminal.

FIG. 18 is another schematic structural diagram of a video playback apparatus according to an embodiment of this application. The apparatus is applied to a terminal. For example, the apparatus may be the terminal 103 in the video playback system shown in FIG. 1. As shown in FIG. 18, the apparatus 180 includes:
a sending module 1801, configured to: when the terminal receives a playback instruction, send, to an upper-layer device, a playback request generated based on the playback instruction, where the playback request includes playback viewpoint information, and the playback viewpoint information indicates a target viewpoint for which playing is requested;
a receiving module 1802, configured to receive a video segment corresponding to the target viewpoint and rotation video data corresponding to the target viewpoint that are sent by the upper-layer device, where the rotation video data includes video data corresponding to a forward viewpoint and/or video data corresponding to a reverse viewpoint, the forward viewpoint includes one or more first viewpoints located in a clockwise direction of the target viewpoint, and the reverse viewpoint includes one or more second viewpoints located in a counterclockwise direction of the target viewpoint;
a processing module 1803, configured to: when the terminal receives a rotation instruction in a process of playing a video image based on the video segment corresponding to the target viewpoint, determine a rotation direction based on the rotation instruction, where the rotation direction is a clockwise direction or a counterclockwise direction; and
a playback module 1804, configured to: in response to the rotation video data including target video data corresponding to a viewpoint located in the rotation direction of the target viewpoint, play the video image based on the target video data.

Optionally, the processing module 1803 is further configured to generate a rotation preparation request, where the rotation preparation request is for requesting to obtain the rotation video data corresponding to the target viewpoint. The sending module 1801 is further configured to send the rotation preparation request to the upper-layer device, where the rotation video data corresponding to the target viewpoint is sent by the upper-layer device in response to the rotation preparation request.

Optionally, the rotation preparation request includes one or more of a preparation rotation direction, a quantity of preparation rotation viewpoints, an identifier of a preparation rotation viewpoint, or a preparation rotation state, where the preparation rotation state includes a dynamic rotation state and/or a static rotation state, and content in the rotation preparation request is pre-configured in the terminal.

Optionally, the target video data is a target rotation segment. The target rotation segment includes a plurality of picture frame groups obtained based on video pictures in video segments corresponding to a plurality of viewpoints in the rotation direction of the target viewpoint. Each picture frame group in the target rotation segment is obtained based on a video picture in a video segment corresponding to one viewpoint in the rotation direction of the target viewpoint. The picture frame groups each include one or more frames of video pictures, and each picture frame group can be independently decoded. The target rotation segment includes a dynamic rotation fragment in response to receiving, by the terminal, the rotation instruction in a video playback state, a plurality of picture frame groups in the dynamic rotation fragments are arranged in a chronological order, and are arranged in ascending order of distances from the plurality of viewpoints to the target viewpoint in the rotation direction; or the target rotation segment includes a static rotation fragment in response to receiving, by the terminal, the rotation instruction in a video pause state, a plurality of picture frame groups in the static rotation fragment correspond to a same playback time period, and are arranged in ascending order of distances from the plurality of viewpoints to the target viewpoint in the rotation direction. The playback module 1804 is configured to decode and play the target rotation segment.

Optionally, the target video data includes video segment that separately corresponds to a plurality of viewpoints located in the rotation direction of the target viewpoint. The playback module 1804 is configured to separately generate picture frame groups based on video pictures in the video segment corresponding to the plurality of viewpoints, where the picture frame groups each include one or more frames of video pictures, and each picture frame group can be independently decoded. The terminal sequentially plays the video pictures in the generated picture frame groups in ascending order of distances from the plurality of viewpoints to the target viewpoint in the rotation direction.

Optionally, the sending module 1801 is further configured to: when the terminal receives the rotation instruction, send, to the upper-layer device, a surround playback request generated based on the rotation instruction. The surround playback request includes rotation viewpoint information, and the rotation viewpoint information indicates a rotation range. The receiving module 1802 is further configured to receive a rotation segment sent by the upper-layer device. The rotation segment includes picture frame groups corresponding to a plurality of viewpoints in the rotation range, the picture frame groups each include one or more frames of video pictures, and each picture frame group can be independently decoded. The playback module 1804 is configured to decode and play the rotation segment.

Optionally, the picture frame group is a GOP; or the picture frame group includes an inserted frame; the picture frame group includes a combination of an inserted frame and a P frame; or the picture frame group includes a combination of an inserted frame, a P frame, and a B frame.

For the apparatus in the foregoing embodiment, specific manners of executing operations by each module are described in detail in embodiments related to the method, and details are not described herein.

An embodiment of this application further provides a video playback system. The system includes an upper-layer device and a terminal. The upper-layer device includes the video playback apparatus shown in FIG. 17, and the terminal includes the video playback apparatus shown in FIG. 18.

FIG. 19 is a block diagram of a video playback apparatus according to an embodiment of this application. The video playback apparatus may be an upper-layer device or a terminal. The upper-layer device may be a video server or a network device. The terminal may be a mobile phone, a tablet computer, an intelligent wearable device, a set-top box, or the like. As shown in FIG. 19, the video playback apparatus 190 includes a processor 1901 and a memory 1902.

The memory 1902 is configured to store a computer program. The computer program includes program instructions.

The processor 1901 is configured to invoke the computer program to implement an action performed by the upper-layer device or an action performed by the terminal in the video playback method shown in FIG. 5.

Optionally, the video playback apparatus 190 further includes a communication bus 1903 and a communication interface 1904.

The processor 1901 includes one or more processing cores. The processor 1901 executes various function applications and data processing by running the computer program.

The memory 1902 may be configured to store the computer program. Optionally, the memory may store an operating system and an application program unit that is required for at least one function. The operating system may be an operating system such as a real time operating system (Real Time eXecutive, RTX), LINUX, UNIX, WINDOWS, or OS X.

There may be a plurality of communication interfaces 1904. The communication interface 1904 is configured to communicate with another storage device or another network device. For example, in this embodiment of this application, a communication interface of the upper-layer device may be configured to send rotation segments to the terminal, and a communication interface of the terminal may be configured to send a surround playback request to the upper-layer device. The network device may be a switch, a router, or the like.

The memory 1902 and the communication interface 1904 are separately connected to the processor 1901 through the communication bus 1903.

An embodiment of this application further provides a computer-readable storage medium. The computer-readable storage medium stores instructions. When the instructions are performed by a processor of a computer device, an action executed by the upper-layer device or an action performed by the terminal in the video playback method described in the foregoing method embodiment is implemented.

A person of ordinary skill in the art may understand that all or some of the steps of embodiments may be implemented by hardware or a program instructing related hardware. The program may be stored in a computer-readable storage medium. The storage medium may include: a read-only memory, a magnetic disk, or an optical disc.

In embodiments of this application, the terms "first", "second", and "third" are merely used for description, but cannot be understood as indications or implications of relative importance.

The term "and/or" in this application describes only an association relationship for describing associated objects and represents that three relationships may exist. For example, A and/or B may represent the following three cases: Only A exists, both A and B exist, and only B exists. In addition, the character "/" in this specification usually indicates an "or" relationship between the associated objects.

The foregoing descriptions are only optional embodiments of this application, but are not intended to limit this application. Any modification, equivalent replacement, or improvement made within the concept and principle of this application should fall within the protection scope of this application.

## Claims

1. A video playback method, wherein the method comprises:
receiving, by an upper-layer device, a playback request sent by a terminal, wherein the playback request comprises playback viewpoint information, and the playback viewpoint information indicates a target viewpoint for which playing is requested; and
sending, by the upper-layer device, a video segment corresponding to the target viewpoint and rotation video data corresponding to the target viewpoint to the terminal, wherein the rotation video data comprises video data corresponding to a forward viewpoint and/or video data corresponding to a reverse viewpoint, the forward viewpoint comprises one or more first viewpoints located in a clockwise direction of the target viewpoint, and the reverse viewpoint comprises one or more second viewpoints located in a counterclockwise direction of the target viewpoint.

2. The method according to claim 1, wherein the sending, by the upper-layer device, rotation video data corresponding to the target viewpoint to the terminal comprises:
sending, by the upper-layer device, the rotation video data to the terminal in response to receiving, by the upper-layer device, a rotation preparation request sent by the terminal, wherein the rotation preparation request is for requesting to obtain the rotation video data corresponding to the target viewpoint; or
sending, by the upper-layer device, the rotation video data to the terminal in response to the playback request.

3. The method according to claim 1 or 2, wherein
the video data corresponding to the forward viewpoint comprises a video segment corresponding to each first viewpoint; or the forward viewpoint comprises a plurality of first viewpoints located in the clockwise direction of the target viewpoint, the video data corresponding to the forward viewpoint is a forward rotation segment, and the forward rotation segment comprises a forward dynamic rotation fragment and/or a forward static rotation fragment, wherein the forward dynamic rotation fragment or the forward static rotation fragment comprises a plurality of picture frame groups obtained based on video pictures in video segments corresponding to the plurality of first viewpoints, each picture frame group in the forward dynamic rotation fragment or the forward static rotation fragment is obtained based on a video picture in a video segment corresponding to one first viewpoint, the plurality of picture frame groups in the forward dynamic rotation fragment are arranged in a chronological order, and are arranged in ascending order of distances from the plurality of first viewpoints to the target viewpoint in the clockwise direction, and the plurality of picture frame groups in the forward static rotation fragment correspond to a same playback time period, and are arranged in ascending order of distances from the plurality of first viewpoints to the target viewpoint in the clockwise direction; and
the video data corresponding to the reverse viewpoint comprises a video segment corresponding to each second viewpoint; or the reverse viewpoint comprises a plurality of second viewpoints located in the counterclockwise direction of the target viewpoint, the video data corresponding to the reverse viewpoint is a reverse rotation segment, and the reverse rotation segment comprises a reverse dynamic rotation fragment and/or a reverse static rotation fragment, wherein the reverse dynamic rotation fragment or the reverse static rotation fragment comprises a plurality of picture frame groups obtained based on video pictures in video segments corresponding to the plurality of second viewpoints, each picture frame group in the reverse dynamic rotation fragment or the reverse static rotation fragment is obtained based on a video picture in a video segment corresponding to one second viewpoint, the plurality of picture frame groups in the reverse dynamic rotation fragment are arranged in a chronological order, and are arranged in ascending order of distances from the plurality of second viewpoints to the target viewpoint in a counterclockwise direction, and the plurality of picture frame groups in the reverse static rotation fragment correspond to a same play time period, and are arranged in ascending order of distances from the plurality of first viewpoints to the target viewpoint in the clockwise direction, wherein
the picture frame groups each comprise one or more frames of video pictures, and each picture frame group can be independently decoded.

4. The method according to any one of claims 1 to 3, wherein the method further comprises:
receiving, by the upper-layer device, a surround playback request sent by the terminal, wherein the surround playback request comprises rotation viewpoint information, and the rotation viewpoint information indicates a rotation range;
determining, by the upper-layer device, playback time information based on the surround playback request;
generating, by the upper-layer device, a rotation segment based on the rotation viewpoint information and the playback time information, wherein the rotation segment comprises picture frame groups corresponding to a plurality of viewpoints in the rotation range, the picture frame groups each comprise one or more frames of video pictures, and each picture frame group can be independently decoded; and
sending, by the upper-layer device, the rotation segment to the terminal.

5. The method according to claim 3 or 4, wherein the picture frame group is a group of pictures GOP; the picture frame group comprises an inserted frame; the picture frame group comprises a combination of an inserted frame and a P frame; or the picture frame group comprises a combination of an inserted frame, a P frame, and a B frame.

6. The method according to claim 2, wherein the rotation preparation request comprises one or more of a preparation rotation direction, a quantity of preparation rotation viewpoints, an identifier of a preparation rotation viewpoint, or a preparation rotation state, wherein the preparation rotation state comprises a dynamic rotation state and/or a static rotation state, and content in the rotation preparation request is pre-configured in the terminal.

7. A video playback method, wherein the method comprises:
when a terminal receives a playback instruction, sending, by the terminal to an upper-layer device, a playback request generated based on the playback instruction, wherein the playback request comprises playback viewpoint information, and the playback viewpoint information indicates a target viewpoint for which playing is requested;
receiving, by the terminal, a video segment corresponding to the target viewpoint and rotation video data corresponding to the target viewpoint that are sent by the upper-layer device, wherein the rotation video data comprises video data corresponding to a forward viewpoint and/or video data corresponding to a reverse viewpoint, the forward viewpoint comprises one or more first viewpoints located in a clockwise direction of the target viewpoint, and the reverse viewpoint comprises one or more second viewpoints located in a counterclockwise direction of the target viewpoint;
when the terminal receives a rotation instruction in a process of playing a video image based on the video segment corresponding to the target viewpoint, determining, by the terminal, a rotation direction based on the rotation instruction, wherein the rotation direction is a clockwise direction or a counterclockwise direction; and
in response to the rotation video data comprising target video data corresponding to a viewpoint located in the rotation direction of the target viewpoint, playing, by the terminal, the video image based on the target video data.

8. The method according to claim 7, wherein before the terminal receives the rotation instruction, the method further comprises:
generating, by the terminal, a rotation preparation request, wherein the rotation preparation request is for requesting to obtain the rotation video data corresponding to the target viewpoint; and
sending, by the terminal, the rotation preparation request to the upper-layer device, wherein the rotation video data corresponding to the target viewpoint is sent by the upper-layer device in response to the rotation preparation request.

9. The method according to claim 8, wherein the rotation preparation request comprises one or more of a preparation rotation direction, a quantity of preparation rotation viewpoints, an identifier of a preparation rotation viewpoint, or a preparation rotation state, wherein the preparation rotation state comprises a dynamic rotation state and/or a static rotation state, and content in the rotation preparation request is pre-configured in the terminal.

10. The method according to any one of claims 7 to 9, wherein the target video data is a target rotation segment, the target rotation segment comprises a plurality of picture frame groups obtained based on video pictures in video segments corresponding to a plurality of viewpoints located in the rotation direction of the target viewpoint, each picture frame group in the target rotation segment is obtained based on a video picture in a video segment corresponding to one viewpoint located in the rotation direction of the target viewpoint, the picture frame groups each comprise one or more frames of video pictures, and each picture frame group can be independently decoded, wherein
the target rotation segment comprises a dynamic rotation fragment in response to receiving, by the terminal, the rotation instruction in a video playback state, wherein a plurality of picture frame groups in the dynamic rotation fragment are arranged in a chronological order, and are arranged in ascending order of distances from the plurality of viewpoints to the target viewpoint in the rotation direction; or the target rotation segment comprises a static rotation fragment in response to receiving, by the terminal, the rotation instruction in a video pause state, wherein a plurality of picture frame groups in the static rotation fragment correspond to a same playback time period, and are arranged in ascending order of distances from the plurality of viewpoints to the target viewpoint in the rotation direction; and
the playing, by the terminal, the video image based on the target video data comprises:
decoding and playing, by the terminal, the target rotation segment.

11. The method according to any one of claims 7 to 9, wherein the target video data comprises video segments separately corresponding to a plurality of viewpoints located in the rotation direction of the target viewpoint; and
the playing, by the terminal, the video image based on the target video data comprises:
separately generating, by the terminal, picture frame groups based on video pictures in the video segments corresponding to the plurality of viewpoints, wherein the picture frame groups each comprise one or more frames of video pictures, and each picture frame group can be independently decoded; and
sequentially playing, by the terminal, the video pictures in the generated picture frame groups in ascending order of distances from the plurality of viewpoints to the target viewpoint in the rotation direction.

12. The method according to any one of claims 7 to 11, wherein the method further comprises:
when the terminal receives the rotation instruction, sending, by the terminal to the upper-layer device, a surround playback request generated based on the rotation instruction, wherein the surround playback request comprises rotation viewpoint information, and the rotation viewpoint information indicates a rotation range;
receiving, by the terminal, a rotation segment sent by the upper-layer device, wherein the rotation segment comprises picture frame groups corresponding to a plurality of viewpoints in the rotation range, the picture frame groups each comprise one or more frames of video pictures, and each picture frame group can be independently decoded; and
decoding and playing, by the terminal, the rotation segment.

13. The method according to any one of claims 10 to 12, wherein the picture frame group is a group of pictures GOP; the picture frame group comprises an inserted frame; the picture frame group comprises a combination of an inserted frame and a P frame; or the picture frame group comprises a combination of an inserted frame, a P frame, and a B frame.

14. A video playback apparatus, used in an upper-layer device, wherein the apparatus comprises:
a receiving module, configured to receive a playback request sent by a terminal, wherein the playback request comprises playback viewpoint information, and the playback viewpoint information indicates a target viewpoint for which playing is requested; and
a sending module, configured to send a video segment corresponding to the target viewpoint and rotation video data corresponding to the target viewpoint to the terminal, wherein the rotation video data comprises video data corresponding to a forward viewpoint and/or video data corresponding to a reverse viewpoint, the forward viewpoint comprises one or more first viewpoints located in a clockwise direction of the target viewpoint, and the reverse viewpoint comprise one or more second viewpoints located in a counterclockwise direction of the target viewpoint.

15. The apparatus according to claim 14, wherein the sending module is configured to:
send the rotation video data to the terminal in response to receiving, by the upper-layer device, a rotation preparation request sent by the terminal, wherein the rotation preparation request is for requesting to obtain the rotation video data corresponding to the target viewpoint; or
send the rotation video data to the terminal in response to the playback request.

16. The apparatus according to claim 14 or 15, wherein
the video data corresponding to the forward viewpoint comprises a video segment corresponding to each first viewpoint; or the forward viewpoint comprises a plurality of first viewpoints located in the clockwise direction of the target viewpoint, the video data corresponding to the forward viewpoint is a forward rotation segment, and the forward rotation segment comprises a forward dynamic rotation fragment and/or a forward static rotation fragment, wherein the forward dynamic rotation fragment or the forward static rotation fragment comprises a plurality of picture frame groups obtained based on video pictures in video segments corresponding to the plurality of first viewpoints, each picture frame group in the forward dynamic rotation fragment or the forward static rotation fragment is obtained based on a video picture in a video segment corresponding to one first viewpoint, the plurality of picture frame groups in the forward dynamic rotation fragment are arranged in a chronological order, and are arranged in ascending order of distances from the plurality of first viewpoints to the target viewpoint in the clockwise direction, and the plurality of picture frame groups in the forward static rotation fragment correspond to a same playback time period, and are arranged in ascending order of distances from the plurality of first viewpoints to the target viewpoint in the clockwise direction; and
the video data corresponding to the reverse viewpoint comprises a video segment corresponding to each second viewpoint; or the reverse viewpoint comprises a plurality of second viewpoints located in the counterclockwise direction of the target viewpoint, the video data corresponding to the reverse viewpoint is a reverse rotation fragment, and the reverse rotation segment comprises a reverse dynamic rotation fragment and/or a reverse static rotation fragment, wherein the reverse dynamic rotation fragment or the reverse static rotation fragment comprises a plurality of picture frame groups obtained based on video pictures in video segments corresponding to the plurality of second viewpoints, each picture frame group in the reverse dynamic rotation fragment or the reverse static rotation fragment is obtained based on a video picture in a video segment corresponding to one second viewpoint, the plurality of picture frame groups in the reverse dynamic rotation fragment are arranged in a chronological order, and are arranged in ascending order of distances from the plurality of second viewpoints to the target viewpoint in a counterclockwise direction, and the plurality of picture frame groups in the reverse static rotation fragment correspond to a same playback time period, and are arranged in ascending order of distances from the plurality of first viewpoints to the target viewpoints in the clockwise direction, wherein
the picture frame groups each comprise one or more frames of video pictures, and each picture frame group can be independently decoded.

17. The apparatus according to any one of claims 14 to 16, wherein the apparatus further comprises a processing module, wherein
the receiving module is further configured to receive a surround playback request sent by the terminal, wherein the surround playback request comprises rotation viewpoint information, and the rotation viewpoint information indicates a rotation range;
the processing module is configured to determine playback time information based on the surround playback request, and generate a rotation segment based on the rotation viewpoint information and the playback time information, wherein the rotation segment comprises picture frame groups corresponding to a plurality of viewpoints in the rotation range, the picture frame groups each comprise one or more frames of video pictures, and each picture frame group can be independently decoded; and
the sending module is further configured to send the rotation segment to the terminal.

18. The apparatus according to claim 16 or 17, wherein the picture frame group is a group of pictures GOP; the picture frame group comprises an inserted frame; the picture frame group comprises a combination of an inserted frame and a P frame; or the picture frame group comprises a combination of an inserted frame, a P frame, and a B frame.

19. The apparatus according to claim 15, wherein the rotation preparation request comprises one or more of a preparation rotation direction, a quantity of preparation rotation viewpoints, an identifier of a preparation rotation viewpoint, or a preparation rotation state, wherein the preparation rotation state comprises a dynamic rotation state and/or a static rotation state, and content in the rotation preparation request is pre-configured in the terminal.

20. A video playback apparatus, used in a terminal, wherein the apparatus comprises:
a sending module, configured to: when the terminal receives a playback instruction, send, to an upper-layer device, a playback request generated based on the playback instruction, wherein the playback request comprises playback viewpoint information, and the playback viewpoint information indicates a target viewpoint for which playing is requested;
a receiving module, configured to receive a video segment corresponding to the target viewpoint and rotation video data corresponding to the target viewpoint that are sent by the upper-layer device, wherein the rotation video data comprises video data corresponding to a forward viewpoint and/or video data corresponding to a reverse viewpoint, the forward viewpoint comprises one or more first viewpoints located in a clockwise direction of the target viewpoint, and the reverse viewpoint comprises one or more second viewpoints located in a counterclockwise direction of the target viewpoint;
a processing module, configured to: when the terminal receives a rotation instruction in a process of playing a video image based on the video segment corresponding to the target viewpoint, determine a rotation direction based on the rotation instruction, wherein the rotation direction is a clockwise direction or a counterclockwise direction; and
a playback module, configured to: in response to the rotation video data comprising target video data corresponding to a viewpoint located in the rotation direction of the target viewpoint, play the video image based on the target video data.

21. The apparatus according to claim 20, wherein
the processing module is further configured to: before the terminal receives the rotation instruction, generate a rotation preparation request, wherein the rotation preparation request is for requesting to obtain the rotation video data corresponding to the target viewpoint; and
the sending module is further configured to send the rotation preparation request to the upper-layer device, wherein the rotation video data corresponding to the target viewpoint is sent by the upper-layer device in response to the rotation preparation request.

22. The apparatus according to claim 21, wherein the rotation preparation request comprises one or more of a preparation rotation direction, a quantity of preparation rotation viewpoints, an identifier of a preparation rotation viewpoint, or a preparation rotation state, wherein the preparation rotation state comprises a dynamic rotation state and/or a static rotation state, and content in the rotation preparation request is pre-configured in the terminal.

23. The apparatus according to any one of claims 20 to 22, wherein the target video data is a target rotation segment, the target rotation segment comprises a plurality of picture frame groups obtained based on video pictures in video segments corresponding to a plurality of viewpoints located in the rotation direction of the target viewpoint, each picture frame group in the target rotation segment is obtained based on a video picture in a video segment corresponding to one viewpoint located in the rotation direction of the target viewpoint, the picture frame groups each comprise one or more frames of video pictures, and each picture frame group can be independently decoded, wherein
the target rotation segment comprises a dynamic rotation fragment in response to receiving, by the terminal, the rotation instruction in a video playback state, wherein a plurality of picture frame groups in the dynamic rotation fragments are arranged in a chronological order, and are arranged in ascending order of distances from the plurality of viewpoints to the target viewpoint in the rotation direction; or the target rotation segment comprises a static rotation fragment in response to receiving, by the terminal, the rotation instruction in a video pause state, wherein a plurality of picture frame groups in the static rotation fragment correspond to a same playback time period, and are arranged in ascending order of distances from the plurality of viewpoints to the target viewpoint in the rotation direction; and
the playback module is configured to decode and play the target rotation segment.

24. The apparatus according to any one of claims 20 to 22, wherein the target video data comprises video segments separately corresponding to a plurality of viewpoints located in the rotation direction of the target viewpoints; and the playback module is configured to:
separately generate picture frame groups based on video pictures in the video segments corresponding to the plurality of viewpoints, wherein the picture frame groups each comprise one or more frames of video pictures, and each picture frame group can be independently decoded; and
sequentially play the video pictures in the generated picture frame groups in ascending order of distances from the plurality of viewpoints to the target viewpoint in the rotation direction.

25. The apparatus according to any one of claims 20 to 24, wherein
the sending module is further configured to: when the terminal receives the rotation instruction, send, to the upper-layer device, a surround playback request generated based on the rotation instruction, wherein the surround playback request comprises rotation viewpoint information, and the rotation viewpoint information indicates a rotation range;
the receiving module is further configured to receive a rotation segment sent by the upper-layer device, wherein the rotation segment comprises picture frame groups corresponding to a plurality of viewpoints in the rotation range, the picture frame groups each comprise one or more frames of video pictures, and each picture frame group can be independently decoded; and
the playback module is further configured to decode and play the rotation segment.

26. The apparatus according to any one of claims 23 to 25, wherein the picture frame group is a group of pictures GOP; the picture frame group comprises an inserted frame; the picture frame group comprises a combination of an inserted frame and a P frame; or the picture frame group comprises a combination of an inserted frame, a P frame, and a B frame.

27. A video playback system, wherein the system comprises an upper-layer device and a terminal, the upper-layer device comprises the video playback apparatus according to any one of claims 14 to 19, and the terminal comprises the video playback apparatus according to any one of claims 20 to 26.

28. A video playback apparatus, comprising a processor and a memory, wherein
the memory is configured to store a computer program, wherein the computer program comprises program instructions; and
the processor is configured to invoke the computer program to implement the video playback method according to any one of claims 1 to 6 or the video playback method according to any one of claims 7 to 13.

29. A computer-readable storage medium, wherein the computer-readable storage medium stores instructions, and when the instructions are executed by a processor of a computer device, the video playback method according to any one of claims 1 to 13 is implemented.

30. A computer program product, comprising a computer program, wherein when the computer program is executed by a processor, the video playback method according to any one of claims 1 to 13 is implemented.
